# EUROPÄISCHE PATENTSCHRIFT

(11) **EP 3 476 807 B1**
(45) Veröffentlichungstag und Bekanntmachung des Hinweises auf die Patenterteilung: **25.11.2020**
(21) Anmeldenummer: 18198760.3
(22) Anmeldetag: 05.10.2018
(51) Int. Cl.: C02F 1/42, B01J 49/06, B01J 49/85

(54) **VERFAHREN ZUM BETRIEB EINER WASSERENTHÄRTUNGSANLAGE, MIT WIEGEN DES VORRATSGEFÄSSES**
METHOD FOR OPERATING A WATER SOFTENING SYSTEM, WITH WEIGHING OF SUPPLY VESSEL
PROCÉDÉ DE FONCTIONNEMENT D'UNE INSTALLATION D'ADOUCISSEMENT DE L'EAU À PESAGE DU RÉCIPIENT DE RÉSERVE

(30) Priorität: 25.10.2017 DE 102017219063
(43) Veröffentlichungstag der Anmeldung: 01.05.2019
(73) Patentinhaber: Judo Wasseraufbereitung GmbH, 71364 Winnenden (DE)
(72) Erfinder: Schwarz, Andreas, 88094 Oberteuringen (DE); Brocke, Sebastian, 74369 Löchgau (DE); Massa, Eckard, 71720 Oberstenfeld-Gronau (DE)
(74) Vertreter: Kohler Schmid Möbus Patentanwälte

(56) Entgegenhaltungen:
- DE-A1-102010 028 756
- JP-A- H07 270 213
- US-A1- 2002 195 403

## Beschreibung

Die Erfindung betrifft ein Verfahren zum Betrieb einer Wasserenthärtungsanlage,
wobei die Wasserenthärtungsanlage umfasst
- eine Enthärtungsvorrichtung, insbesondere umfassend mindestens einen Behälter mit einem lonentauscherharz,
- ein Vorratsgefäß mit Regeneriermittellösung,
- eine Wiegeeinrichtung zur Bestimmung des Gewichts des Vorratsgefäßes einschließlich seines Inhalts;
wobei in einem Regenerationszyklus zur Regeneration der Enthärtungsvorrichtung Regeneriermittellösung aus dem Vorratsgefäß entnommen und in die Enthärtungsvorrichtung gefördert wird,
und wobei mit der Wiegeeinrichtung das Gewicht des Vorratsgefäßes einschließlich seines Inhalts bestimmt wird.

Eine solches Verfahren ist aus der DE 10 2013 011 751 A1 bekannt geworden.

In Haushalten oder auch in technischen Anlagen wird aus vielfältigen Gründen oftmals enthärtetes Wasser gewünscht oder benötigt. Häufig werden dafür Wasserenthärtungsanlagen eingesetzt, die auf lonentauscherharz basieren. Ein lonentauscher nimmt die Härtebildner (Calzium- und Magnesiumionen) auf und gibt dafür nicht härtebildende Ionen (meist Natriumionen) ab.

Das lonentauscherharz kann dabei nur eine begrenzte Menge an Härtebildnern binden (Erschöpfung des lonentauscherharzes) und muss daher von Zeit zu Zeit regeneriert werden. Für die Regeneration wird typischerweise das lonentauscherharz einer Salzsole ausgesetzt.

Die Regeneration von lonentauscherharz mittels Salzsole verursacht bei der Wasserenthärtung Kosten. Eine zu große Menge an Salz für die Regeneration lässt einen Teil des Salzes ungenutzt, d.h. dieser Teil erhöht die bereitgestellte Enthärtungskapazität nicht mehr. Umgekehrt führt eine zu geringe eingesetzte Menge an Salz zu einer unvollständigen Regeneration, wodurch häufigere Regenerationen nötig werden, was den Verschleiß erhöht oder auch die Verfügbarkeit der Enthärtung verringert, oder wodurch gar ein Härtedurchbruch auftreten kann. Daher sollte die für eine Regeneration bzw. einen Regenerationszyklus eingesetzte Salzmenge genau einstellbar sein.

Wenn für die Regenerationen eine Salzsole mit einer bekannten, festen Konzentration zur Verfügung steht, kann die bei einer Regeneration eingesetzte Salzmenge über das Volumen an eingesetzter Salzsole bestimmt werden.

In der Praxis wird die für eine Regeneration eingesetzte Salzsole ("Regeneriermittellösung") meist durch Auflösen von festem Salz ("Regeneriermittel") in einem Vorratsgefäß relativ kurz vor der Durchführung der Regeneration hergestellt. Dies führt dazu, dass die Konzentration der Regeneriermittellösung nicht genau bekannt ist. Die Konzentration hängt insbesondere von der Salzlösezeit, der Temperatur, der Bereitstellungsart (etwa Tablettenform und Tablettengröße) des festen Salzes und auch von der Geometrie des Vorratsgefäßes, in dem die Regeneriermittellösung hergestellt wird, ab. Zudem wird auch oft eine konzentrierte Salzsole noch verdünnt, bevor sie als Regeneriermittellösung eingesetzt wird.

Zur Überwachung der Konzentration einer Salzsole, die zum Regenerieren eingesetzt werden soll, kann ein Leitfähigkeitssensor eingesetzt werden, vgl. die DE 10 2010 028 756 A1. Der Einsatz von Leitfähigkeitssensoren in vergleichsweise hoch konzentrierten Salzlösungen ist aufgrund von Korrosion schwierig; entsprechend beständige Elektrodenmaterialien sind sehr teuer.

Aus der DE 10 2013 011 751 A1 ist es bekannt, einen Salzsolebehälter auf einer Wiegeeinrichtung anzuordnen, um den Füllstand des Salzsolebehälters zu überwachen. Bei Erreichen eines vorbestimmten Grenzwerts wird ein Warnsignal abgegeben.

Die US 2011/0084030 A1 beschreibt eine Anlage zur Bereitstellung von Hypochloritlösung, wobei ein Vorratsbehälter auf einer Wiegeeinrichtung angeordnet ist, die das Gewicht des Behälters und einen Füllstand im Behälter überwacht. Die Konzentration der Hypochloritlösung beim Befüllen des Behälters ist bekannt und wird in eine Steuerung eingegeben. Eine aktuelle Konzentration der Hypochloritlösung wird anhand der Anfangskonzentration und einer hinterlegten Abbaukurve ermittelt.

Aus der DE 10 2008 052 959 A1 ist ein Verfahren zum Betrieb einer Wasserenthärtungsanlage bekannt geworden, wobei eine Anzahl von durchführbaren Regenerationen bestimmt wird. Hierzu wird die in ein Vorratsgefäß eingefüllte Menge an festem Regeneriersalz durch Wiegen bestimmt. Die pro Regeneration benötigte Salzmenge wird ebenso durch Wiegen bestimmt und als Umrechnungsfaktor in einer elektronischen Steuereinrichtung hinterlegt.

Aus der JPH07270213A ist ein Verfahren zum Betrieb einer Wasserenthärtungsanlage bekannt geworden, wobei eine Wiegeeinrichtung verwendet wird.

### Aufgabe der Erfindung

Es ist die Aufgabe der vorliegenden Erfindung, ein Verfahren zum Betrieb einer Wasserenthärtungsanlage zur Verfügung zu stellen, mit dem der Salzverbrauch eines Regenerationszyklus auf einfache Weise genau ermittelt werden kann.

### Kurze Beschreibung der Erfindung

Diese Aufgabe wird erfindungsgemäß gelöst durch ein Verfahren der eingangs genannten Art, das dadurch gekennzeichnet ist,
dass im Vorratsgefäß festes Regeneriersalz zur Herstellung der Regeneriermittellösung bevorratet ist, dass die Wasserenthärtungsanlage (1) eine Vorrichtung zur Erfassung und/ oder Einstellung eines Flüssigkeitsniveaus im Vorratsgefäß aufweist, wobei im Rahmen des Regenerationszyklus wenigstens einmal Regeneriermittellösung aus dem Vorratsgefäß entnommen wird und wenigstens einmal dem Vorratsgefäß Wasser zugeführt wird, so dass sich das Flüssigkeitsniveau im Vorrätsgefäß insgesamt nicht verändert und am Ende des Regenerationszyklus dasselbe Flüssigkeitsniveau im Vorratsbehälter erreicht ist wie am Anfang des Regenerationszyklus,
und dass eine in diesem Regenerationszyklus für die Regeneration eingesetzte Salzmenge M_{RZ} entsprechend der Differenz der Massen des Vorratsbehälters einschließlich seines Inhalts am Anfang des Regenerationszyklus und am Ende des Regenerationszyklus ermittelt wird, indem eine über den Regenerationszyklus insgesamt erfolgte Massenabnahme, die auf dem Dichtunterschied von entnommener Regeneriermittellösung und nachgefülltem Wasser beruht, mit der Wiegeeinrichtung bestimmt wird.

Im Rahmen des erfindungsgemäßen Verfahrens ist es möglich, die in einem Regenerationszyklus eingesetzte Menge an Regeneriermittel ("Salz", beispielsweise NaCI-Salz) im Wesentlichen aus mit der Wiegeeinrichtung beobachteten Gewichtsänderungen (Massenänderungen) des Vorratsgefäßes einschließlich seines Inhalts zu bestimmen. Der Einsatz empfindlicher Sensoren, etwa Leitfähigkeitssensoren, zur Konzentrationsbestimmung in korrosiver Regeneriermittellösung ist nicht nötig; typischerweise wird im Rahmen der Erfindung die Konzentration der Regeneriermittellösung auch nicht bestimmt, da sie nicht benötigt wird. Auch ist das Verfahren nicht auf vergleichsweise ungenaue Wasserzähler angewiesen, etwa um das Volumen der verbrauchten Regeneriermittellösung zu bestimmen; typischerweise wird im Rahmen der Erfindung das Volumen der eingesetzten Regeneriermittellösung nicht bestimmt, da es nicht benötigt wird.

Für die Erfindung geeignete handelsübliche Wiegeeinrichtungen für das Vorratsgefäß sind kostengünstig und vergleichsweise genau. Zur Einstellung des Flüssigkeitsniveaus im Vorratsbehälter werden grundsätzlich keine Sensoren benötigt; ein Flüssigkeitsniveau kann insbesondere durch geeignete Platzierung einer Saugöffnung und/oder eines Überlaufs eingestellt werden; ebenso ist der Einsatz von mit Schwimmerkörpern betätigten mechanischen Ventilen möglich. Zudem ist die Erfassung oder Überwachung eines Flüssigkeitsniveaus mit Sensoren, sollte dies dennoch gewünscht sein, relativ einfach möglich, da ein Sensor zu diesem Zweck nicht der korrosiven Regenerationsmittellösung ausgesetzt zu werden braucht.

Die Dichte des zugeführten Wassers und die Dichte der entnommenen Regeneriermittellösung unterscheiden sich, wobei die Dichte mit zunehmender Konzentration der Regeneriermittellösung ansteigt. Daraus ergibt sich eine Massendifferenz, die mittels der Wiegeeinrichtung bestimmt werden kann. Das Volumen von nachgefülltem Wasser und entnommener Regeneriermittellösung ist, durch die Rückkehr zum ursprünglichen Flüssigkeitsniveau, innerhalb eines Regenerationszyklus nahezu gleich. Entsprechend ist es möglich, über die Differenz der Massen zu Beginn und am Ende des Regenerationszyklus die bei dem Regenerationszyklus eingesetzte (aus dem Behälter entnommene) Menge an festem Regeneriermittel zu bestimmen. Man beachte, dass eine oder mehrere Entnahmen von Regeneriermittellösung und eine und mehrere Zugaben von Wasser in beliebiger Reihenfolge innerhalb des Regenerationszyklus stattfinden können. Die während eines Regenerationszyklus entnommene Regeneriermittellösung wird der Enthärtungsvorrichtung zugeführt.

Die eingesetzte Salzmenge M_{RZ} kann bestimmt werden, indem die Massen des Vorratsgefäßes einschließlich seines Inhalts zu Beginn des Regenerationszyklus und am Ende des Regenerationszyklus, bei jeweils gleichem Flüssigkeitsniveau, bestimmt werden und deren Differenz direkt gebildet wird. Es ist aber auch möglich, im Regenerationszyklus Teil-Massenänderungen von einzelnen Schritten oder Gruppen von Schritten von Regeneriermittellösungs-Entnahme und/oder Wasser-Zugabe zu verfolgen (zu bestimmen), und aus den Teil-Massenänderungen (mittels Summen und/oder Differenzen) die im Regenerationszyklus insgesamt eingesetzte Salzmenge M_{RZ} zu berechnen.

Im normalen Betrieb der Wasserenthärtungsanlage wechseln sich typischerweise Phasen des Enthärtungsbetriebs und Regenerationszyklen ab; es ist aber auch beispielsweise möglich, dass zwischen zwei Phasen des Enthärtungsbetriebs mehrere Regenerationzyklen stattfinden. Die Erfindung ermöglicht die Bestimmung des tatsächlichen Salzverbrauchs jedes einzelnen Regenerationszyklus. Falls gewünscht, kann über den Salzverbrauch der einzelnen Regenerationszyklen auch eine Restmenge an festem Regeneriersalz im Vorratsgefäß mitverfolgt werden, um einen Nachfüllbedarf zu ermitteln.

Bevorzugt sind die Wiegeeinrichtung und das Vorratsgefäß von einem Gehäuse umgeben, um zu verhindern, dass unbeabsichtigt zusätzliche äußere Gewichte (oder auch direkte Erschütterungen) an der Wiegeeinrichtung und/oder dem Vorratsgefäß wirken und so Gewichtsmessungen verfälschen.

### Bevorzugte Varianten der Erfindung

Bevorzugt ist eine Variante des erfindungsgemäßen Verfahrens, die vorsieht, dass der Regenerationszyklus einen oder mehrere Entnahmezyklen umfasst, wobei ein Entnahmezyklus folgende Schritte umfasst:
E1.1) ein Flüssigkeitsniveau N1 von Regeneriermittellösung im Vorratsgefäß wird eingestellt oder erfasst,
E1.2) dem Vorratsgefäß wird eine Masse M1_{EZ} an Wasser zugeführt, wobei das Flüssigkeitsniveau im Vorratsgefäß ansteigt,
E1.3) dem Vorratsgefäß wird so viel Regeneriermittellösung entnommen, bis das Flüssigkeitsniveau N1 wieder erreicht ist, wobei mit dieser Entnahme ein Massenverlust M2_{EZ} des Vorratsbehälters einschließlich seines Inhalts einhergeht,
oder wobei ein Entnahmezyklus folgende Schritte umfasst:
E2.1) ein Flüssigkeitsniveau N2 von Regeneriermittellösung im Vorratsgefäß (7) wird eingestellt oder erfasst,
E2.2) eine Masse M3_{EZ} an Regeneriermittellösung wird aus dem Vorratsgefäß entnommen, wobei das Flüssigkeitsniveau im Vorratsgefäß absinkt,
E2.3) dem Vorratsgefäß wird so viel Wasser zugeführt, bis das Flüssigkeitsniveau N2 wieder erreicht ist, wobei mit dieser Zuführung eine Massenzunahme M4_{EZ} des Vorratsbehälters einschließlich seines Inhalts einhergeht. Durch die Unterteilung des Regenerationszyklus in bzw. die Nutzung von Entnahmezyklen ist die Steuerung der in einem Regenerationszyklus eingesetzten Salzmenge erleichtert. Über die Einstellung (Vorgabe) von M1_{EZ} und M3_{EZ} kann die in einem Entnahmezyklus eingesetzte Salzmenge auf einfache Weise und gut kontrollierbar vorgegeben werden. In vielen Fällen umfasst ein Regenerationszyklus nur einen Entnahmezyklus. Typischerweise laufen entweder alle Entnahmezyklen nach E1.1) bis E1.3) ab, oder alle Entnahmezyklen nach E2.1) bis E2.3) ab. Es ist aber auch möglich, die beiden Typen von Entnahmezyklen zu mischen, insbesondere auch in einem Regenerationszyklus.

Eine bevorzugte Weiterentwicklung dieser Variante sieht vor,
dass in einem Entnahmezyklus nach Schritt E1.3) folgt:
E1.4) eine in diesem Entnahmezyklus für die Regeneration eingesetzte Salzmenge entsprechend der Differenz ΔM_{EZ} der Massen des Vorratsbehälters einschließlich seines Inhalts am Anfang von Schritt E1.2) und am Ende von Schritt E1.3) wird ermittelt, insbesondere wobei ΔM_{EZ} berechnet wird mit ΔM_{EZ} = M2_{EZ}-M1_{EZ}, oder in einem Entnahmezyklus nach Schritt E2.3) folgt:
E2.4) eine in diesem Entnahmezyklus für die Regeneration eingesetzte Salzmenge entsprechend der Differenz ΔM_{EZ} der Massen des Vorratsbehälters einschließlich seines Inhalts am Anfang von Schritt E2.2) und am Ende von Schritt E2.3) wird ermittelt, insbesondere wobei ΔM_{EZ} berechnet wird mit ΔM_{EZ} = M3_{EZ}-M4_{EZ},
insbesondere wobei aus der Summe der Differenzen ΔM_{EZ} aller Entnahmezyklen des Regenerationszyklus die in dem Regenerationszyklus für die Regeneration eingesetzte Salzmenge M_{RZ} ermittelt wird. Über ΔM_{EZ} kann die im jeweiligen Entnahmezyklus eingesetzte Salzmenge bestimmt werden, was für die Steuerung des Verfahrens und insbesondere eine genaue Einstellung einer gewünschten eingesetzten Salzmenge M_{RZ} des Regenerationszyklus insgesamt genutzt werden kann. Wenn der Regenerationszyklus nur aus Entnahmezyklen, zu denen jeweils ΔM_{EZ} bestimmt worden ist, besteht, kann über die Summe aller ΔM_{EZ} auch auf einfache Weise M_{RZ} bestimmt werden. Wenn der Regenerationszyklus nur einen Entnahmezyklus umfasst, hat die Summe zur Bestimmung von M_{RZ} nur einen Summanden, also M_{RZ}=ΔM_{EZ}.

In einer bevorzugten Weiterbildung wird zur Steuerung einer in dem Regenerationszyklus für die Regeneration eingesetzte Salzmenge M_{RZ} eine Masse M1_{RZ} und/oder eine Masse M3_{RZ} eingestellt, mit M1_{RZ}: Summe der Massen M1_{EZ} aller Entnahmezyklen des Regenerationszyklus, und M3_{RZ}: Summe der Massen M3_{EZ} aller Entnahmezyklen des Regenerationszyklus. Wird in Schritt E1.2) mehr Wasser zugeführt (M1_{EZ} also erhöht), so muss anschließend auch mehr Regeneriermittel in E1.3) entnommen werden, so dass ΔM_{EZ} ∼ M1_{EZ}. Ebenso ist ΔM_{EZ} ∼ M3_{EZ}. Somit kann über M1_{RZ} und M3_{RZ} die Salzmenge M_{RZ} auf einfache Weise eingestellt werden. Man beachte, dass im Falle nur eines Regenerationszyklus die Summe M1_{RZ} bzw. die Summe M3_{RZ} nur einen Summanden aufweist.

Bevorzugt ist auch eine Variante, die vorsieht,
dass das Verfahren mehrere Regenerationszyklen umfasst,
insbesondere wobei die Regenerationszyklen sich mit Phasen eines Enthärtungsbetriebs der Wasserenthärtungsanlage abwechseln, in denen durch die Enthärtungsvorrichtung fließendes Wasser enthärtet wird,
dass ein erster Sollwert SW1 für eine pro Regenerationszyklus für die Regeneration einzusetzende Salzmenge definiert ist,
und dass Verfahrensparameter, insbesondere die Massen M1_{EZ} und/oder M3_{EZ} in den Entnahmezyklen, so angepasst werden, insbesondere iterativ angepasst werden, dass die Salzmengen M_{RZ} der Regenerationszyklen auf den ersten Sollwert SW1 eingeregelt werden. Durch die Einregelung der eingesetzten Salzmenge auf den ersten Sollwert SW1 kann das Verfahren besonders wirtschaftlich und zuverlässig geführt werden. Ein unnötiger Verbrauch von Salz, der keine weitere Kapazität in einem lonentauscherharz regeneriert, wird vermieden. Umgekehrt werden auch unvollständige Regenerationen durch zu wenig Salzeinsatz, bei denen nicht die volle Enthärterkapazität zur Verfügung gestellt wird, vermieden. Der erste Sollwert ist typischerweise in einer elektronischen Steuereinrichtung hinterlegt.

Eine bevorzugte Weiterentwicklung dieser Variante, wobei ein oder mehrere Entnahmezyklen eingerichtet sind, sieht vor, dass bei Überschreiten des ersten Sollwerts SW1 durch die Salzmenge M_{RZ} eines letzten Regenerationszyklus in einem oder mehreren nachfolgenden Regenerationszyklen
- eine Masse M1_{RZ} gegenüber dem letzten Regenerationszyklus verringert wird und/oder
- eine Masse M3_{RZ} gegenüber dem letzten Regenerationszyklus verringert wird, mit M1_{RZ}: Summe der Massen M1_{EZ} aller Entnahmezyklen des Regenerationszyklus, und M3_{RZ}: Summe der Massen M3_{EZ} aller Entnahmezyklen des Regenerationszyklus. Durch die Reduzierung von M1_{RZ} (insgesamt entnommene Regeneriermittellösung bis das jeweilige Flüssigkeitsniveau N1 wieder erreicht ist) und/oder M3_{RZ} (insgesamt entnommene Regeneriermittellösung, wobei mit Wasser auf das jeweilige Flüssigkeitsniveau N2 wieder aufgefüllt wurde) wird bei der oder den nachfolgenden Regenerationszyklen ("Regenerationen") die eingesetzte Salzmenge M_{RZ} auf einfache und gut kontrollierbare Weise verringert. Dadurch wird die eingesetzte Salzmenge M_{RZ} iterativ dem Sollwert SW1 angenähert. Eine Absenkung von M1_{EZ} bewirkt eine Verminderung von M2_{EZ}, und damit auch von ΔM_{EZ}. Eine Absenkung von M3_{EZ} senkt ΔM_{EZ} direkt.

Ebenso bevorzugt ist eine Weiterentwicklung, wobei ein oder mehrere Entnahmezyklen eingerichtet sind, bei der bei Unterschreiten des ersten Sollwerts SW1 durch die Salzmenge M_{RZ} eines letzten Regenerationszyklus in einem oder mehreren nachfolgenden Regenerationszyklen
- eine Masse M1_{RZ} gegenüber dem letzten Regenerationszyklus erhöht wird und/oder
- eine Masse M3_{RZ} gegenüber dem letzten Regenerationszyklus erhöht wird, mit M1_{RZ}: Summe der Massen M1_{EZ} aller Entnahmezyklen des Regenerationszyklus, und M3_{RZ}: Summe der Massen M3_{EZ} aller Entnahmezyklen des Regenerationszyklus. Durch die Erhöhung von M1_{RZ} (insgesamt entnommene Regeneriermittellösung bis das jeweilige Flüssigkeitsniveau N1 wieder erreicht ist) und/oder M3_{RZ} (insgesamt entnommene Regeneriermittellösung, wobei mit Wasser wieder auf das Flüssigkeitsniveau N2 aufgefüllt wurde) wird bei der oder den nachfolgenden Regenerationszyklen ("Regenerationen") die eingesetzte Salzmenge M_{RZ} auf einfache und gut kontrollierbare Weise erhöht. Dadurch wird die eingesetzte Salzmenge M_{RZ} iterativ dem Sollwert SW1 angenähert. Eine Erhöhung von M1_{EZ} bewirkt eine Erhöhung von M2_{EZ}, und damit auch von ΔM_{EZ}. Eine Erhöhung von M3_{EZ} senkt ΔM_{EZ} direkt.

Bei einer vorteilhaften Weiterbildung wird bei Unterschreiten des ersten Sollwerts SW1 durch die Salzmenge M_{RZ} eines letzten Regenerationszyklus die Dauer einer darauffolgenden Phase eines Enthärtungsbetriebs gegenüber einer Standard-Dauer einer Phase des Enthärtungsbetriebs, die ohne Unterschreiten des Sollwerts SW1 angewandt würde, verkürzt. Bei Unterschreiten des Sollwerts SW1 steht nach der Regeneration nicht die volle Enthärtungskapazität der Enthärtungsvorrichtung zur Verfügung. Durch Verkürzen des nachfolgenden Enthärtungsbetriebs wird ein Härtedurchbruch vermieden bzw. wird die Enthärtungskapazität rechtzeitig vor Erschöpfung wieder hergestellt.

Besonders bevorzugt ist eine Variante, wobei ein oder mehrere Entnahmezyklen eingerichtet sind und jeweils ΔM_{EZ} ermittelt wird, bei der in einem Regenerationszyklus nach Durchlaufen eines jeweiligen Entnahmezyklus die Summe der Differenzen ΔM_{EZ} aller bisherigen Entnahmezyklen des Regenerationszyklus mit dem ersten Sollwert SW1 vergleichen wird, und bei Unterschreiten des ersten Sollwerts SW1 noch ein weiterer Entnahmezyklus angeschlossen wird, bis der Sollwert SW1 erreicht ist. Durch dieses Vorgehen kann der erste Sollwert SW1 in der Regel recht genau eingehalten werden. Im ersten Entnahmezyklus wird typischerweise die eingesetzte Salzmenge (etwa über M1_{EZ} oder M3_{EZ}) vorsichtig, also eher zu niedrig als zu hoch, bemessen. Aus der Differenz des ersten Sollwerts SW1 und der Summe der bisherigen ΔM_{EZ} des Regenerationszyklus (wobei diese Summe nach dem ersten Entnahmezyklus zunächst nur einen Summanden umfasst) kann eine noch benötigte Salzmenge bestimmt werden, die für die Durchführung des nächsten Entnahmezyklus einen Hinweis gibt (etwa wie das nächste M1_{EZ} oder M3_{EZ} gewählt werden sollte, um den Sollwert SW1 mit dem nächsten Entnahmezyklus möglichst genau zu treffen; hierbei kann beispielsweise für den nächsten Entnahmezyklus von der gleichen Proportionalität von M1_{EZ} oder M3_{EZ} zu ΔM_{EZ} ausgegangen werden wie in dem oder den vorhergehenden Entnahmezyklen des Regenerationszyklus).

Bei einer bevorzugten Variante wird bei Unterschreiten des ersten Sollwerts SW1 durch die Salzmenge M_{RZ} eines letzten Regenerationszyklus für einen oder mehrere nachfolgende Regenerationszyklen eine Salzlösezeit, insbesondere von einer Zuführung von Wasser gemäß E1.2) oder E2.3) bis zur nächsten Entnahme von Regeneriermittellösung aus dem Vorratsbehälter gemäß E1.3) oder E2.2), gegenüber einer zuletzt angewandten Salzlösezeit verlängert. Die Konzentration der Regeneriermittellösung im Vorratsgefäß (in welchem festes Regeneriermittel enthalten ist) steigt nach einem Nachfüllen von Wasser an, bei ausreichender Zeit bis die Sättigungskonzentration erreicht ist (oder alles noch vorhandene feste Regeneriersalz gelöst ist); der zeitliche Verlauf des Lösevorgangs ist insbesondere von der Temperatur und der Darreicherungsform des festen Regeneriermittels im Vorratsgefäß abhängig. Wenn die Konzentration der Regeneriermittellösung aufgrund einer kurzen Salzlösezeit zu gering ist, kann in dieser Variante die Salzlösezeit für die Zukunft erhöht und damit die Konzentration angehoben werden, wodurch der erste Sollwert SW1 besser angenähert wird. Alternativ besteht die Möglichkeit, mehr Regeneriermittellösung mit geringerer Konzentration zu verwenden. Letzteres kann von Vorteil sein, da die Wirksamkeit der Besalzung steigt, wenn die Konzentration der Regeneriermittellösung nicht gesättigt, sondern etwas verdünnt ist. Eine nachträgliche Verdünnung der Regeneriermittellösung ist aufwändiger und insbesondere bei Verwendung eines Injektors nur begrenzt möglich.

Vorteilhaft ist weiterhin eine Variante, bei der ein zweiter Sollwert SW2 für eine pro Regenerationszyklus für die Regeneration einzusetzende Salzmenge definiert ist, und bei Unterschreiten des zweiten Sollwerts SW2 durch die Salzmenge M_{RZ} eines letzten Regenerationszyklus ein Normalbetrieb, in welchem sich Regenerationszyklen und Phasen des Enthärtungsbetriebs der Wasserbehandlungsanlage abwechseln, beendet wird und in einen Sonderbetrieb gewechselt wird. Bei Salzmangel (wenn das feste Regeneriermittel im Vorratsgefäß zur Neige geht) wird die Regeneriermittellösung nach einer Zugabe von Wasser immer verdünnter. Dadurch nimmt die bei einer Regeneration eingesetzte Salzmenge von Regeneration zu Regeneration immer mehr ab, bis schließlich der Sollwert SW2 erreicht ist bzw. von M_{RZ} unterschritten wird. Bis zu diesem Sollwert SW2 wird nach der Regeneration eine akzeptable Teilkapazität der Enthärtungsvorrichtung wieder hergestellt, so dass die Wasserenthärtungsanlage weiter betrieben werden kann. Wird der Sollwert SW2 unterschritten, so ist so wenig Salz vorhanden, dass auch eine Teilregeneration nicht mehr durchgeführt werden kann und ein ordnungsgemäßer Weiterbetrieb der Wasserenthärtungsanalage nicht möglich ist. In diesem Fall können verschiedene Maßnahmen ergriffen werden ("Sonderbetrieb"), beispielsweise Weiterbetrieb mit (verminderter) Enthärtungsfunktion für eine kurze Restzeit, Weiterbetrieb über einen Bypass (ohne Enthärtungsfunktion), oder sofortige Absperrung und Konservierung der Wasserenthärtungsanlage. Gleichzeitig kann eine Alarmmeldung vorgesehen sein (optisch, akustisch, Meldung an eine Leitwarte oder auf ein Mobiltelefon). Im Rahmen dieser Variante kann einerseits eine vorhandene Restmenge an Regeneriermittellösung noch ausgenutzt werden und andererseits ein akuter Salzmangel erkannt und angezeigt werden. Der zweite Sollwert SW2 ist kleiner als der erste Sollwert SW1, bevorzugt mit SW2≤0,5^{∗}SW1.

Bei einer bevorzugten Weiterentwicklung dieser Variante ist im Sonderbetrieb die Enthärtungsvorrichtung für eine Enthärtung von Wasser gesperrt, insbesondere wobei die Enthärtungsvorrichtung mit einem Bypass umgangen wird und/oder die Enthärtungsvorrichtung mit einer Konservierlösung befüllt wird. Durch die Sperrung wird eine unnütze Durchströmung der Enthärtungsvorrichtung vermieden; falls kein Bypass eingesetzt wird, wird dadurch auch eine Schädigung einer nachgeschalteten Wasserinstallation durch hartes Wasser verhindert ("vollständiger Wasserstop"). Durch den Bypass kann eine Weiterversorgung der nachgeschalteten Wasserinstallation mit nicht enthärtetem Wasser gewährleistet werden, was im Falle von nicht härteempfindlichen Wasserinstallationen gegenüber einem vollständigen Wasserstop bevorzugt ist (etwa wenn die Enthärtung vor allem aus Komfortgründen gewünscht ist). Mit einer Konservierlösung kann eine Verkeimung der Enthärtungsvorrichtung verhindert werden. Alternativ zu dieser Weiterentwicklung kann bei einem Übergang in den Sonderbetrieb noch für eine kurze Zeit ein Weiterbetrieb der Enthärtungsvorrichtung (mit verminderter Enthärtungsfunktion) gestattet sein.

Bei einer anderen Weiterentwicklung wird der Wechsel in den Sonderbetrieb und/oder der Zustand des Sonderbetriebs durch eine oder mehrere Alarmmeldungen angezeigt, insbesondere optisch und/oder akustisch und/oder elektronisch, etwa an eine Leitwarte, und/oder per Funk, etwa an ein Mobiltelefon. Durch die Alarmmeldung wird ein Betreiber der Wasserenthärtungsanlage darauf hingewiesen, dass ein Salzmangel herrscht, so dass der Betreiber diesen Salzmangel rasch beheben kann und Anwendungen, die eines enthärteten Wassers bedürfen, zurückstellen kann.

Bevorzugt ist weiterhin eine Variante, die vorsieht,
dass mit der Wiegeeinrichtung das Gewicht m des Vorratsgefäßes einschließlich seines Inhalts als Funktion der Zeit t mitverfolgt wird und ein zeitlicher Gradient des Gewichts dm/dt bestimmt wird,
dass für eine oder mehrere Betriebssituationen Grenzwerte oder Soll-Intervalle für den Gradienten dm/dt definiert sind,
und dass eine Fehlfunktion der Wasserenthärtungsanlage festgestellt wird, wenn der Gradient dm/dt in einer Betriebssituation einen zugehörigen Grenzwert oder ein zugehöriges Soll-Intervall verletzt. Über den Gradienten dm/dt können eine Vielzahl von Fehlfunktionen einfach und zuverlässig erkannt werden, insbesondere ohne dass es weiterer Sensoren bedürfte. Bei Feststellung einer Fehlfunktion können geeignete Gegenmaßnahmen eingeleitet werden, entweder automatisch oder durch den Betreiber der Wasserenthärtungsanlage, der durch eine Alarmmeldung benachrichtigt werden kann. Folgende Fehlfunktionen / Betriebsstörungen können beispielsweise erkannt werden:
- Nachfüllen von Regeneriersalz während der Regeneration -> kurzeitig großer Gradient;
- Ablage von "Fremdgewichten" auf dem Vorratsgefäß -> kurzzeitig großer Gradient;
- äußere Erschütterungen des Vorratsgefäßes -> starke Schwankungen des Gradienten;
- Injektor saugt zu schwach Regeneriermittellösung -> Betrag des Gradienten zu gering;
- Pumpe fördert zu schnell / zu langsam -> Betrag des Gradienten zu groß / zu gering;
- Undichtigkeit im Enthärtungsbetrieb -> Gradient ungleich null.
Ein definierter Grenzwert bzw. ein definiertes Soll-Intervall ist abhängig von der Betriebssituation, und insbesondere abhängig davon, ob die Wasserenthärtungsanlage sich in einem Regenerationszyklus oder in einer Phase des Enthärtungsbetriebs befindet. So kann beispielsweise während einer Regeneration (beim Nachfüllen des Vorratsgefäßes mit Wasser und beim Entnehmen von Regeneriermittellösung aus dem Vorratsgefäß) das Soll-Intervall durch einen Sollgradienten +/- 10% festgelegt werden, während im Enthärtungsbetrieb der Sollgradient Null ist (Regeneriersalz / Wasser / Regeneriermittellösung werden weder verbraucht noch nachgefüllt). Maßnahmen beim Erkennen einer Fehlfunktion können beispielsweise sein:
- Verwendung von gespeicherten Standardwerten (letzter vertrauenswürdiger Wert, Mittelwert aus vorhergehenden x Regenerationen);
- Injektor-/Pumpenlaufzeit anpassen;
- Alarm und/oder Fehlermeldung an den Anlagenbetreiber.

Bei einer vorteilhaften Weiterentwicklung der obigen Variante ist vorgesehen, dass für Zeiten einer Entnahme von Regeneriermittellösung aus dem Vorratsgefäß, insbesondere für die Schritte E1.3) und/oder E2.2), ein Mindest-Absolutbetrag MINB des Gradienten dm/dt festgelegt ist, bei dessen Unterschreiten eine Fehlfunktion der Regeneriermittelförderung aus dem Vorratsgefäß festgesellt wird,
und/oder dass in einer Phase eines Enthärtungsbetriebs ein Maximal-Absolutbetrag MAXB des Gradienten dm/dt festgelegt ist, bei dessen Überschreiten eine Undichtigkeit des Vorratsgefäßes festgestellt wird. Diese beiden in der Praxis bedeutenden Fehlfunktionen können im Rahmen der Erfindung über die Wiegeeinrichtung leicht erkannt werden. Das Unterschreiten von MINB deutet auf eine defekte Pumpe oder einen defekten Injektor oder eine Leitungsverstopfung hin; es empfiehlt sich eine Reparatur, wobei kurzfristig auch die Pumpleistung gesteigert werden kann, um eine zu niedrige Förderung auszugleichen bzw. wieder anzuheben. Ein Überschreiten von MAXB deutet ein Leck an, das im Rahmen einer Reparatur abgedichtet werden sollte.

Bevorzugt ist auch eine Variante, bei der das Flüssigkeitsniveau im Vorratsgefäß, insbesondere das Flüssigkeitsniveau N1 in E1.3) und/oder das Flüssigkeitsniveau N2 in E2.3), eingestellt wird, indem ein mechanisches Ventil mittels eines Schwimmkörpers, der auf der Regeneriermittellösung im Vorratsgefäß schwimmt, betätigt wird, insbesondere wobei das mechanische Ventil in oder an einer Zuführ- und/oder Entnahmeleitung im Vorratsgefäß angeordnet ist. Der Einsatz eines mit einem Schwimmkörper betätigten mechanischen Ventils ist einfach und robust. Zudem kann die Betätigung des mechanischen Ventils im zeitlichen Verlauf des Gewichts m des Vorratsgefäßes einschließlich Inhalt als Funktion der Zeit t leicht erkannt werden (als "Knick"), wodurch andere Steuerungsfunktionen ausgelöst werden können, etwa das Abstellen eines Treibwasserflusses an einem Injektor. Alternativ zu dieser Variante kann auch das Flüssigkeitsniveau im Vorratsgefäß elektronisch erfasst werden (etwa mit einem über einen Schwimmkörper betätigten elektrischen Schalter, oder über eine optische Messung oder eine Mikrowellenmessung) und ein motorisches Ventil in einer Zuführ- und/oder Entnahmeleitung entsprechend der elektronischen Flüssigkeitsniveau-Erfassung angesteuert werden.
Ebenso ist es beispielsweise möglich, das Flüssigkeitsniveau N1 über das untere Ende einer Saugleitung im Vorratsgefäß zu definieren, und die Einstellung des Flüssigkeitsniveaus N1 erfolgt dann über ein Absaugen, bis keine Regeneriermittellösung mehr gefördert wird.

Vorteilhaft ist weiterhin eine Variante, die vorsieht,
dass mit der Wiegeeinrichtung das Gewicht m des Vorratsgefäßes einschließlich seines Inhalts als Funktion der Zeit t mitverfolgt wird,
und dass ein Abschluss einer Entnahme von Regeneriermittellösung, insbesondere gemäß E1.3), und/oder ein Abschluss eines Zuführens von Wasser, insbesondere gemäß E2.3), aus dem zeitlichen Verlauf m(t) bestimmt wird, insbesondere wobei der Abschluss über den zeitlicher Gradienten dm/dt bestimmt wird. Der zeitliche Verlauf m(t) kann mit der Wiegeeinrichtung leicht mit verfolgt werden, so dass ein weiterer Sensor zur Bestimmung der Abschlüsse der Schritte E1.3) oder E2.3) nicht benötigt wird, was besonders kostengünstig ist. Die Bestimmung ist besonders einfach, wenn das Flüssigkeitsniveau über ein mechanisches Ventil, das mit einem Schwimmkörper betätigt wird (siehe oben), erfolgt. In diesem Fall hat der zeitliche Verlauf m(t) einen leicht erkennbaren Knick.

Vorteilhaft ist auch eine Variante, die vorsieht, dass die Enthärtungsvorrichtung mehrere Behälter mit lonentauscherharz umfasst,
und dass die Behälter im selben Regenerationszyklus regeneriert werden. Die Zusammenfassung der Regeneration mehrerer Behälter, typischerweise aller Behälter, vereinfacht den Überblick über den Salzverbrauch und kann helfen, Verschleiß zu reduzieren.

Eine bevorzugte Weiterbildung, bei der ein oder mehrere Entnahmezyklen eingerichtet sind, sieht vor, dass in Schritt E1.3) und/oder in Schritt E2.2) aus dem Vorratsgefäß entnommene Regeneriermittellösung nacheinander in unterschiedliche Behälter gefördert wird, insbesondere wobei Behälter, in die in Schritt E1.3) und/oder Schritt E2.2) gerade keine Regeneriermittellösung gefördert wird, während Schritt E1.3) und/oder Schritt E2.2) eine Enthärtungsfunktion für durch die Wasserenthärtungsanlage fließendes Wasser aufrechterhalten. Durch die Zusammenfassung der Regeneration von verschiedenen Behältern in einem Entnahmezyklus kann die Anzahl der Abpump- und Nachfüllvorgänge gering gehalten werden, was den Verschleiß reduziert. Gerade nicht in Regeneration befindliche Behälter können weiter Wasser enthärten und dadurch eine unterbrechungsfreie Versorgung mit enthärtetem Wasser zur Verfügung stellen. Falls gewünscht, kann die für einen Entnahmezyklus bestimmte Salzmenge ΔM_{EZ} oder die für einen Regenerationszyklus bestimmte Salzmenge M_{RZ} noch entsprechend den in die Behälter geförderten Massen den Behältern näherungsweise zugeordnet werden. Alternativ ist es auch möglich, je Entnahmezyklus bzw. je Schritt E1.3) oder E2.2) eine Regeneration lediglich eines Behälters vorzusehen.

In den Rahmen der vorliegenden Erfindung fällt auch eine Wasserenthärtungsanlage, umfassend
- eine Enthärtungsvorrichtung, insbesondere umfassend mindestens einen Behälter mit einem lonentauscherharz,
- ein Vorratsgefäß mit Regeneriermittellösung,
- eine Wiegeeinrichtung zur Bestimmung des Gewichts des Vorratsgefäßes einschließlich seines Inhalts,
dadurch gekennzeichnet,
dass im Vorratsgefäß festes Regeneriersalz enthalten ist,
und dass die Wasserenthärtungsanlage ausgebildet ist zur Durchführung eines obigen, erfindungsgemäßen Verfahrens,
wobei die Wasserenthärtungsanlage eine Vorrichtung zur Erfassung und/oder Einstellung eines Flüssigkeitsniveaus im Vorratsgefäß, insbesondere des Flüssigkeitsniveaus N1 und/oder des Flüssigkeitsniveaus N2, aufweist,
und wobei die Wasserenthärtungsanlage eine elektronische Steuereinrichtung zur automatischen Durchführung, des oder der Regenerationszyklen umfasst. Mit der erfindungsgemäßen Wasserenthärtungsanlage ist es möglich, auf einfache Weise den Salzverbrauch von einzelnen Regenerationszyklen zu bestimmen; dadurch wird es möglich, auch den Salzverbrauch der einzelnen Regenerationszyklen gezielt zu steuern, insbesondere auf einen ersten Sollwert SW1 einzustellen, bevorzugt iterativ einzustellen. Die Vorrichtung zur Erfassung und/oder Einstellung eines Flüssigkeitsniveaus muss lediglich ein Flüssigkeitsniveau (beispielsweise N1 bzw. N2) erfassen bzw. einstellen können. Hierzu können beispielsweise ein Schwimmerschalter, ein Überlauf, kapazitive Sensoren, Elektroden zur Erfassung der Leitfähigkeit, optische Methoden, Ultraschall oder Mikrowellen eingesetzt werden. Als Wiegeeinrichtung bieten sich kostengünstige Load Cell Sensoren an. Der Transport der Regeneriermittellösung vom Vorratsgefäß in die Enthärtungsvorrichtung bzw. einen Behälter mit lonentauscherharz kann mittels Injektor oder Pumpe erfolgen. Das Regeneriersalz (Regeneriermittel) ist meist NaCl, etwa in Tablettenform.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Darstellung einer Ausführungsform einer Wasserenthärtungsanlage für die Erfindung;
- Fig. 2: eine Darstellung des zeitlichen Verlaufs des Gewichts eines Vorratsgefäßes einschließlich Inhalt beim Füllen und Absaugen von Wasser, ohne Regeneriersalz;
- Fig. 3: eine Darstellung des zeitlichen Verlaufs des Gewichts eines Vorratsgefäßes einschließlich Inhalt beim Füllen mit Wasser und Absaugen von Regeneriermittel, mit festem Regeneriersalz im Vorratsgefäß;
- Fig. 4: eine Darstellung des zeitlichen Verlaufs des Gewichts eines Vorratsgefäßes, am Ende eines Absaugvorgangs, mit Schwimmerkörper-betätigtem mechanischen Ventil (durchgezogene Linie) und mit Absaugöffnung (gestrichelte Linie);
- Fig. 5: ein Diagramm zur Abhängigkeit der pro Entnahmezyklus eingesetzten Salzmenge von einer zugeführten Wassermenge und einer Salzlösezeit;
- Fig. 6: ein Ablaufdiagramm einer ersten Variante des erfindungsgemäßen Verfahrens, wobei ein Regenerationszyklus mehrere Entnahmezyklen umfasst und eine eingesetzte Salzmenge M_{RZ} auf einen ersten Sollwert SW1 eingestellt wird;
- Fig. 7: ein Ablaufdiagramm einer zweiten Variante des erfindungsgemäßen Verfahrens, mit iterativer Anpassung der Masse M1_{RZ} zur Einregelung von M_{RZ} auf einen ersten Sollwert SW1 über mehrere Regenerationszyklen;
- Fig. 8: ein Ablaufdiagramm einer dritten Variante eines erfindungsgemäßen Verfahrens, wobei innerhalb eines Entnahmezyklus mehrere Behälter mit lonentauscherharz regeneriert werden, und mit Überwachung eines zweiten Sollwerts SW2.

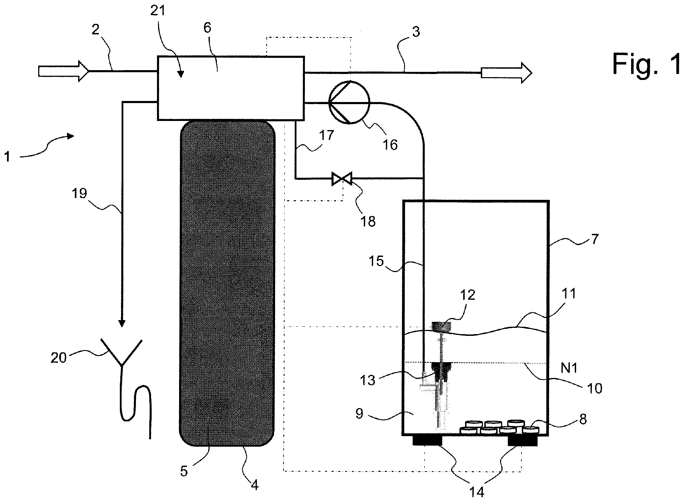

Die **Fig. 1** zeigt eine Ausführungsform einer Wasserenthärtungsanlage 1 für die Erfindung. Die hier vorgestellte Wasserenthärtungsanlage 1 ist dazu ausgebildet, einen Entnahmezyklus mit den Schritten E1.1) bis E1.4) ausführen zu können.

Durch einen Zulauf für Rohwasser 2 fließt einer Enthärtungsvorrichtung 21 nicht enthärtetes Wasser zu, etwa aus einem örtlichen Trinkwassernetz. In einem Enthärtungsbetrieb wird das zulaufende Rohwasser durch die Enthärtungsvorrichtung 21 ganz oder teilweise enthärtet und fließt durch einen Ablauf für enthärtetes Wasser 3 ab, insbesondere zu einer lokalen Wasserinstallation wie dem Wasserleitungssystem eines Hauses oder einer Wohnung.

Die Enthärtungsvorrichtung 21 umfasst hier einen Behälter 4 gefüllt mit einem regenerierbaren lonentauscherharz 5; in anderen Ausführungsformen können auch mehrere Behälter mit lonentauscherharz, insbesondere für einen Pendelbetrieb oder Parallelbetrieb, vorgesehen sein. In die Enthärtungsvorrichtung 21 integriert ist hier eine elektronische Steuereinrichtung 6, welche die Wasserströme der Wasserenthärtungsanlage insgesamt steuert.

Für die Regeneration der Enthärtungsvorrichtung 21 bzw. des lonentauscherharzes 5 ist ein Vorratsgefäß 7 eingerichtet, in welchem festes Regeneriersalz (Regeneriermittel) 8, hier NaCl in Tablettenform, bevorratet ist. Über dem festen Regeneriersalz 8 steht eine wässrige Regeneriermittellösung 9, die gelöstes Regeneriersalz enthält. Auf der Oberfläche der Regeneriermittellösung 9, auf dem derzeitigen Flüssigkeitsniveau 11, schwimmt ein Schwimmkörper (Schwimmer) 12, welcher mit einem mechanischen Ventil 13 verbunden ist. Das mechanische Ventil 13 blockiert im Falle eines Absaugens von Regeneriermittel 9 aus dem Vorratsgefäß 7 den Wasserfluss, wenn das Flüssigkeitsniveau 11 auf das in Fig. 1 gestrichelt eingezeichnete untere Flüssigkeitsniveau N1 gefallen ist.

Das momentane Gewicht bzw. die Masse des Vorratsgefäßes 7 einschließlich seines Inhalts (also insbesondere enthaltener Regeneriermittellösung bzw. nachgefülltem Wasser) kann mit einer Wiegeeinrichtung 14 bestimmt werden.

Das mechanische Ventil 13 ist am unteren Ende einer Absaug- und Nachfüllleitung 15 ausgebildet, welche in das Vorratsgefäß 7 führt. Die Absaug- und Nachfüllleitung 15 ist mit einer Pumpe 16 verbunden, mit deren Hilfe Regeneriermittellösung 9 aus dem Vorratsgefäß in die Enthärtungsvorrichtung 21 gepumpt werden kann. In die Absaug- und Nachfüllleitung 15 mündet auch eine Leitung für Nachfüllwasser 17, in welcher ein Ventil 18 angeordnet ist. Über die Leitung 17 kann Rohwasser vom Zulauf 2 in das Vorratsgefäß 7 eingelassen werden.

Verbrauchte Regeneriermittellösung, mit der das lonentauscherharz 5 beschickt wurde, kann durch einen Ablauf 19 in einem Abwasserkanal 20 abgelassen werden.

Die elektronische Steuereinrichtung 6 kann insbesondere die Wiegeeinrichtung 14 auslesen, die Pumpe 16 aktivieren und deaktivieren, und das Ventil 18 öffnen oder schließen. Falls gewünscht kann auch zusätzlich ein Sensor (etwa am Schwimmkörper) vorgesehen sein, mit dem das aktuelle Flüssigkeitsniveau im Vorratsbehälter 7 bestimmbar ist. Zudem kann die Steuereinrichtung 6 zwischen Enthärtungsbetrieb und Regenerationsbetrieb wechseln und dafür Ventile in der Enthärtungsvorrichtung 21 umschalten (nicht näher dargestellt).

Im Rahmen eines Entnahmezyklus während eines Regenerationszyklus kann wie folgt vorgegangen werden: Ausgehend vom Flüssigkeitsniveau N1 10 wird dem Vorratsgefäß 7 eine definierte Masse M1_{EZ} an Wasser über die Leitungen 17, 15 zugeführt. Dabei steigt das Flüssigkeitsniveau an, vgl. das eingezeichnete Flüssigkeitsniveau 11. Die Massenzunahme wird mittels einer Wiegeeinrichtung 14 überwacht. Sobald die Masse M1_{EZ} zugeführt ist, wird das Ventil 18 geschlossen. Im Vorratsgefäß 7 befindet sich das feste Regeneriersalz 8, das sich im zugeführten Wasser unter Bildung einer Regeneriermittellösung 9 allmählich löst. Nach Zuführung der Masse M1_{EZ} an Wasser wird sofort oder bevorzugt zeitverzögert Regeneriermittellösung 9 über die Leitung 15 mittels der Pumpe 16 entnommen. Alternativ kann die Regeneriermittellösung 9 mit einem Injektor aus dem Vorratsgefäß 7 abgesaugt werden (nicht näher dargestellt). Die Massenabnahme während der Entnahme von Regeneriermittellösung 9 wird mit der Wiegeeinrichtung 14 bestimmt. Sobald das aktuelle Flüssigkeitsniveau 11 das Flüssigkeitsniveau N1 10 wieder erreicht, schließt das über den Schwimmerkörper 12 betätigte mechanische Ventil 13. Die gesamte Massenabnahme entspricht dann M2_{EZ}.

Die Volumina an zugeführtem Wasser und entnommener Regeneriermittellösung sind identisch. Die Massendifferenz ΔMZ_{EZ} =M2_{EZ} - M1_{EZ} entspricht exakt der dem Vorratsgefäß 7 entnommenen und für die Regeneration des lonenaustauscherharzes 5 eingesetzten Salzmenge. Die Volumina selbst müssen nicht bestimmt werden. Die Beeinflussung der eingesetzten Salzmenge durch unterschiedliche Konzentrationen der Regeneriermittellösung 9 wird erkannt, ohne dass die Konzentration der Regeneriermittellösung bestimmt wird.

Alternativ kann auch ein oberes Flüssigkeitsniveau N2 definiert sein, beispielsweise mittels eines über einen Schwimmerkörper betätigten mechanischen Ventils, das bei Erreichen des oberen Flüssigkeitsniveaus N2 schließt (nicht näher dargestellt), um einen Entnahmezyklus mit den Schritten E2.1) bis E2.4) einzurichten.

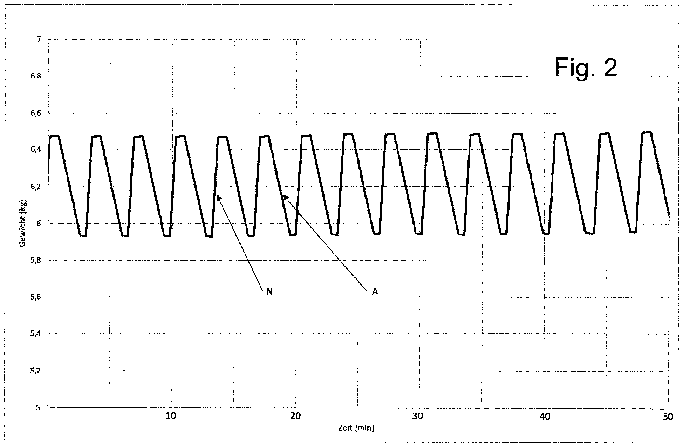

Die **Fig. 2** zeigt zur allgemeinen Erläuterung die Gewichtsänderung eines Vorratsgefäßes (wie in Fig. 1 dargestellt) beim Füllen und Absaugen mit Wasser ohne Regeneriersalz. Nach oben aufgetragen ist das Gewicht des Vorratsgefäßes einschließlich Inhalt, nach rechts die Zeit. Es wird jeweils vom festen Flüssigkeitsniveau N1 aus eine feste Masse M1_{EZ} an Wasser aufgefüllt, und anschließend wieder auf das Flüssigkeitsniveau N1 abgepumpt.

Die Massenzunahme beim Nachfüllen von Wasser in das Vorratsgefäß (Schritt N) und die Massenabnahme beim Absaugen von Wasser aus dem Vorratsgefäß (Schritt A) sind identisch.

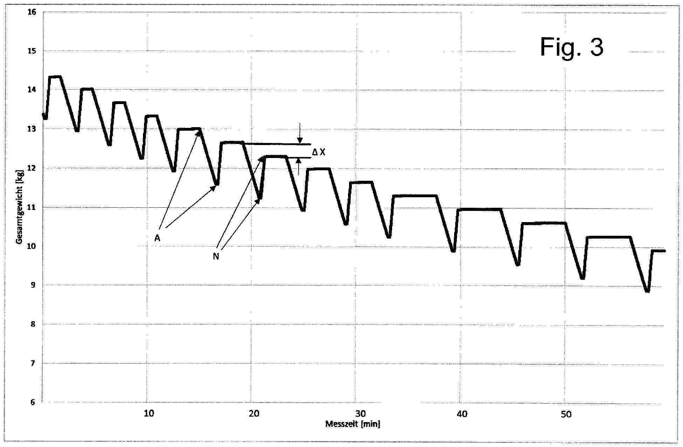

In **Fig. 3** ist nun die Gewichtsänderung beim Füllen mit Wasser und Absaugen von Regeneriermittellösung beim Vorratsgefäß gezeigt; nunmehr ist gemäß der Erfindung festes Regeneriersalz im Vorratsgefäß vorgehalten. Nach oben aufgetragen ist das Gewicht des Vorratsgefäßes einschließlich Inhalt, nach rechts die Zeit. Es wird wiederum jeweils vom festen Flüssigkeitsniveau N1 aus eine feste Masse M1_{EZ} an Wasser aufgefüllt, und anschließend wieder auf das Flüssigkeitsniveau N1 abgepumpt.

Die abgesaugte Regeneriermittellösung (Schritt A, markiert hier Anfang und Ende) ist aufgrund des Salzgehaltes schwerer als das entsprechende Volumen an nachgefülltem Wasser (Schritt N, markiert wiederum Anfang und Ende). Die eingezeichnete resultierende Gewichtsänderung ΔX pro Entnahmezyklus entspricht der pro Entnahmezyklus eingesetzten Salzmenge ΔM_{EZ}. Das Gesamtgewicht (Vorratsgefäß + festes Regeneriersalz + Regeneriermittellösung + nachgefülltes Wasser) nimmt nach jedem Entnahmezyklus weiter ab, entsprechend dem Salzverbrauch.

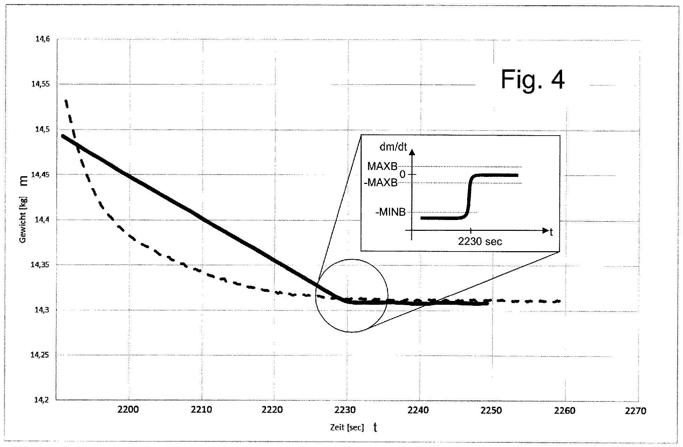

In **Fig. 4** ist die Gewichtsänderung des Vorratsgefäßes einschließlich Inhalt am Ende einer Entnahme (vgl. Schritt A in Fig. 3) vergrößert dargestellt. Nach oben aufgetragen ist das Gewicht m des Vorratsgefäßes einschließlich Inhalt, nach rechts die Zeit t.

Bei der durchgezogenen Linie schließt ein über einen Schwimmkörper betätigtes mechanisches Ventil die Absaugleitung, sobald das vorgegebene Flüssigkeitsniveau N1 erreicht ist, erkennbar am "Knick" in der Kurve. Das Niveau ist dann gleichbleibend und die Gewichtserfassung jenseits des Knicks exakt und reproduzierbar.

Der Ort des Knicks kann insbesondere über die Bestimmung des zeitlichen Gradienten dm/dt des nach oben aufgetragenen Gewichts m als Funktion der nach rechts aufgetragenen Zeit t bestimmt werden. In der zeitlichen Ableitung dm/dt ist der Ort des Knicks als Stufe leicht erkennbar (siehe eingefügtes schematisches Diagramm).

Falls gewünscht, kann für die Zeiten der Entnahme (links im eingefügten Diagramm) ein Minimal-Absolutbetrag MINB des Gradienten dm/dt definiert sein. Sollte der Betrag von dm/dt den Betrag MINB nicht erreichen, ist anzunehmen, dass die Pumpe defekt ist oder eine Leitung verstopft ist, was durch einen Alarm angezeigt werden sollte. Ebenso kann ein Maximal-Absolutbetrag MAXB des Gradienten dm/dt für Zeiten eines Enthärtungsbetriebs (rechts im eingefügten Diagramm) definiert sein, bei dessen Überschreiten von einer Undichtigkeit des Vorratsgefäßes auszugehen ist (typischerweise so, dass Regeneriermittellösung aus diesem heraustropft, ggf. aber auch so, dass Rohwasser in das Vorratsgefäß hineintropft).

Die gestrichelte Linie zeigt die Situation ohne ein mechanisches Ventil; das Flüssigkeitsniveau wird dann über die vertikale Position einer Absaugöffnung ("unteres Ende") der Absaug- und Nachfüllleitung bestimmt. Das heißt, es wird so lange Regeneriermittellösung aus dem Vorratsgefäß entnommen, bis das Flüssigkeitsniveau das untere Ende der Absaugleitung erreicht. Hier nähert sich das Gewicht allmählich einem Minimum (da zunehmend nicht nur Regeneriermittellösung, sondern auch Luft angesaugt wird), und das Ende des Entnahmevorgangs ist nicht genau definiert und damit die Gewichtserfassung weniger exakt.

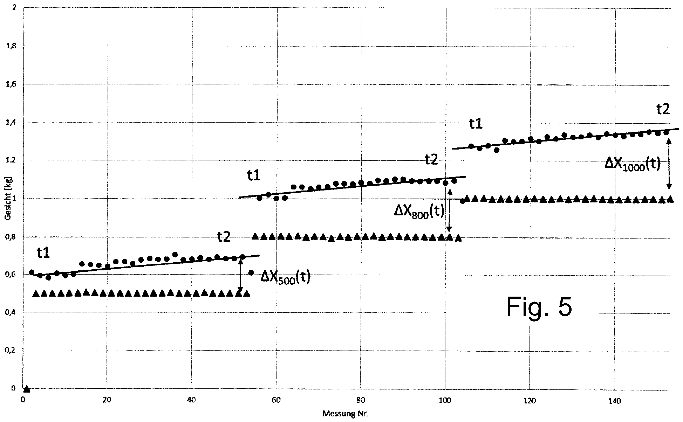

Die **Fig. 5** illustriert die Abhängigkeit der pro Regeneration bzw. Entnahmezyklus eingesetzten Salzmenge von der zugeführten Wassermenge und der Salzlösezeit.

Es werden drei unterschiedliche Mengen an Wasser dem Vorratsgefäß zugeführt: 500 g (links), 800 g (Mitte) bzw. 1000 g (rechts). Dabei steigt das Flüssigkeitsniveau entsprechend an. Es wird dann eine bestimmte Zeit gewartet, um festes Regeneriersalz zu lösen. Die Salzlösezeiten liegen zwischen t1 = 5 min und t2 = 60 min. Die anschließende Entnahme von Regeneriermittellösung aus dem Vorratsgefäß erfolgt so lange, bis das ursprüngliche Flüssigkeitsniveau wieder erreicht ist. Die verbrauchte Salzmenge ist im Schaubild als ΔX(t) dargestellt. ΔX(t) steigt mit der dem Vorratsgefäß zugeführten Menge an Wasser sowie mit zunehmenden Salzlösezeiten an.

Das erfindungsgemäße Verfahren erfasst die tatsächlich verbrauchte Salzmenge bei unterschiedlichen Konzentrationen der Regeneriermittellösung, ohne dass die Konzentration selbst bestimmt werden muss.

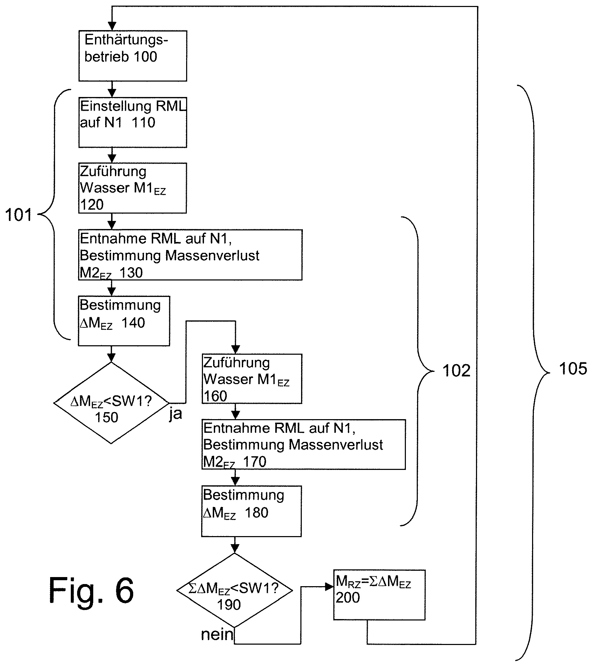

Die **Fig. 6** illustriert beispielhaft den Ablauf des erfindungsgemäßen Verfahrens zum Betrieb einer Wasserenthärtungsanlage in einer ersten Variante. Die Wasserenthärtungsanlage kann hierfür insbesondere wie in Fig. 1 dargestellt aufgebaut sein.

In einem Enthärtungsbetrieb 100 wird die Enthärtungsvorrichtung zur Enthärtung von durchlaufendem Wasser eingesetzt. Wenn die Wasserenthärtungsanlage eine Erschöpfung oder baldige Erschöpfung der Enthärtungsvorrichtung erkennt, etwa anhand einer seit dem letzten Regenerationszyklus durch die Enthärtungsvorrichtung geflossenen Wassermenge, schaltet die Wasserenthärtungsanlage in einem Regenerationszyklus 105 um. Der Regenerationszyklus 105 umfasst hier zwei Entnahmezyklen 101, 102, in denen jeweils Regeneriermittellösung aus dem Vorratsgefäß entnommen wird.

Im ersten Entnahmezyklus 101 wird zunächst das Flüssigkeitsniveau der Regeneriermittellösung (RML) im Vorratsgefäß auf N1 eingestellt 110. Gegebenenfalls wird hierfür Regeneriermittellösung abgepumpt oder Wasser aufgefüllt; oftmals ist jedoch das Flüssigkeitsniveau der Regeneriermittellösung durch einen vorhergehenden Entnahmezyklus auf N1 eingestellt, so dass keine Korrekturen in Schritt 110 nötig sind.

Sodann wird eine durch eine elektronische Steuereinrichtung vorgegebene Menge Wasser, typischerweise Rohwasser aus einem angeschlossenen Trinkwasserversorgungsnetz, der Masse M1_{EZ} in das Vorratsgefäß aufgefüllt 120. Dabei steigt das Flüssigkeitsniveau im Vorratsgefäß. Die Wiegeeinrichtung verfolgt die zugegebene Masse mit, und sobald M1_{EZ} eingefüllt ist, wird die weitere Wasserzufuhr beendet.

Das zugegebene Wasser hat dann für eine Salzlösezeit Gelegenheit, festes Regeneriersalz im Vorratsgefäß aufzulösen; meist beträgt die Salzlösezeit zwischen 2 Minuten und 24 Stunden, bevorzugt zwischen 5 Minuten und 60 Minuten.

Sodann wird aus dem Vorratsgefäß Regeneriermittellösung entnommen und zum Zwecke der Regeneration in die Enthärtungsvorrichtung bzw. über das dort befindliche lonentauscherharz gefördert 130, bis das Flüssigkeitsniveau wieder auf N1 gefallen ist. Man beachte, dass die entnommene Regeneriermittellösung hier unverdünnt über das lonentauscherharz geleitet wird; es ist aber auch möglich, die Regeneriermittellösung noch zu verdünnen, bevor sie auf das lonentauscherharz geleitet wird, insbesondere um den Wirkungsgrad der Besalzung zu erhöhen. Der Zeitpunkt, wenn das Flüssigkeitsniveau N1 erreicht ist, wird über einen Schwimmkörper bestimmt, der ein mechanisches Ventil betätigt, das den Saugstrom an Regeneriermittellösung unterbricht. Gleichzeitig wird der mit der Entnahme der Regeneriermittellösung einhergehende Massenverlust M2_{EZ} bestimmt.

Anschließend wird die Differenz ΔM_{EZ}=M2_{EZ} - M1_{EZ} des ersten Entnahmezyklus 101 bestimmt 140. Man beachte, dass die Differenz ΔM_{EZ} alternativ auch unmittelbar über ein gemessenes Gewicht (Masse) des Vorratsgefäßes einschließlich seines Inhalts zu Beginn von Schritt 120 und ein gemessenes Gewicht (Masse) des Vorratsgefäßes einschließlich seines Inhalts am Ende von Schritt 130 bestimmt werden kann.

Sodann wird überprüft, ob die Differenz ΔM_{EZ} kleiner ist als ein erster Sollwert SW1, vgl. Schritt 150; der erste Sollwert SW1 entspricht einer für den gesamten Regenerationszyklus 105 vorgesehenen zu entnehmenden Salzmenge. Falls ja, wie in der gezeigten Variante, schließt sich nun ein zweiter Entnahmezyklus 102 an.

Der zweite Entnahmezyklus 102 umfasst wiederum zunächst die Einstellung des Flüssigkeitsniveaus der Regeneriermittellösung auf N1, was bereits in Schritt 130 erfolgte und daher keiner weiteren Maßnahmen bedarf. Der Schritt 130 ist hier somit zu beiden Entnahmezyklen 101, 102 zugehörig. Falls gewünscht, kann zusätzlich nochmals das Flüssigkeitsniveau im Vorratsgefäß zu diesem Zeitpunkt überprüft und ggf. korrigiert werden (nicht näher dargestellt).

Anschließend wird wiederum eine Masse M1_{EZ} an Wasser in das Vorratsgefäß eingelassen 160; typischerweise ist die Masse M1_{EZ} des zweiten Entnahmezyklus 102 von der Masse M1_{EZ} des ersten Entnahmezyklus 101 verschieden, insbesondere kleiner als die Masse M1_{EZ} des ersten Entnahmezyklus 101.

Wiederum nach Ablauf einer gewissen Salzlösezeit wird sodann wieder Regeneriermittellösung abgepumpt und wiederum der Enthärtungsvorrichtung zugeführt, um diese weiter zu regenerieren, bis das Flüssigkeitsniveau wieder auf N1 abgesunken ist 170. Dabei wird wiederum der Massenverlust M2_{EZ} bestimmt.

Es ergibt sich die Differenz ΔM_{EZ} von M2_{EZ} und M1_{EZ} des zweiten Entnahmezyklus 102 gemäß Schritt 180.

Anschließend wird geprüft, ob die Summe der Differenzen ΔM_{EZ} der bisherigen Entnahmeschritte 101, 102 des Regenerationszyklus den ersten Sollwert SW1 noch unterschreitet 190. In der gezeigten Variante ist dies nicht der Fall; somit finden keine weiteren Entnahmezyklen mehr in diesem Regenerationszyklus 105 statt. Die Summe der Differenzen ΔM_{EZ} der bisherigen Entnahmezyklen 101, 102 entspricht dann der im gesamten Regenerationszyklus 105 eingesetzten Salzmenge M_{RZ}.

Man beachte, dass die eingesetzte Salzmenge M_{RZ} auch als Differenz der Massen des Vorratsgefäßes einschließlich seines Inhalts zu Beginn von Schritt 120 und am Ende von Schritt 170 direkt bestimmt werden kann.

Mit der frisch regenerierten Enthärtungsvorrichtung kann dann eine nächste Phase des Enthärtungsbetriebs 100 wieder aufgenommen werden.

Falls die Summe der bisherigen Differenzen ΔM_{EZ} in Schritt 190 noch unter dem ersten Sollwert SW1 liegen sollte, kann noch ein dritter Entnahmezyklus angeschlossen werden, und so fort (nicht näher dargestellt). Ebenso kann im Falle eines Überschreitens des ersten Sollwerts SW1 durch den Wert ΔM_{EZ} in Schritt 150 sofort, also ohne zweiten Entnahmezyklus 102, in den Enthärtungsbetrieb 100 zurück gewechselt werden (nicht näher dargestellt).

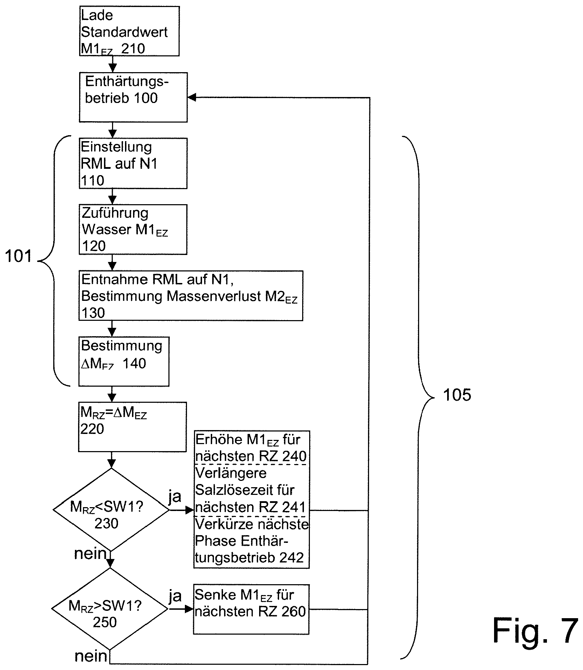

**Fig. 7** illustriert eine zweite Variante eines erfindungsgemäßen Betriebsverfahrens einer Wasserenthärtungsanlage, das in großen Teilen der ersten Variante ähnelt, so dass hier nur die wesentlichen Unterschiede erläutert werden.

In dieser Variante liest eine elektronische Steuereinrichtung, die Regenerationszyklen der Wasserenthärtungsanlage automatisch durchführt, zunächst einen Standardwert für die Masse M1_{EZ} ein, mit dem in der Regel eine eingesetzte Salzmenge M_{RZ} entsprechend dem ersten Sollwert SW1 in lediglich einem Entnahmezyklus 101 pro Regenerationszyklus 105 erreicht werden kann. Phasen eines Enthärtungsbetriebs 100 wechseln sich mit Regenerationszyklen 105 ab.

In jedem Regenerationszyklus 105 findet hier lediglich ein Entnahmezyklus 101 statt, mit den Schritten Einstellung der Regeneriermittellösung (RML) auf das Flüssigkeitsniveau N1 110, Zuführung der Masse M1_{EZ} von Wasser 120, Entnahme von Regeneriermittellösung (RML) bis zum Niveau N1 zurück unter Bestimmung des Masseverlusts M2_{EZ} 130, und Bestimmung der Differenz ΔM_{EZ} 140, wie bereits oben erläutert. Im ersten Regenerierzyklus 105 wird für M1_{EZ} dabei der in Schritt 210 geladene Standardwert verwendet. Da nur ein Entnahmezyklus 101 stattfindet, ist ΔM_{EZ} gleich der im Regenerationszyklus 105 insgesamt eingesetzten Salzmenge M_{RZ} 220.

Sodann wird geprüft, ob M_{RZ} unter dem ersten Sollwert SW1 liegt 230. Falls ja, wird für den nächsten Regenerationszyklus vorgemerkt, dass in diesem eine größere Menge M1_{EZ} als im soeben beendeten Regenerationszyklus 105 eingesetzt werden soll 240. Typischerweise legt die elektronische Steuereinrichtung den nächsten anzuwendenden Wert M1_{EZ} zu diesem Zeitpunkt quantitativ fest und speichert ihn ab.

Alternativ oder zusätzlich kann auch zu diesem Zeitpunkt festgelegt werden, dass im nächsten Regenerationszyklus eine längere Salzlösezeit zwischen den Schritten 120 und 130 angewandt werden soll 241. Durch die längere Salzlösezeit kann die Konzentration der Regeneriermittellösung erhöht werden, falls die Sättigungskonzentration bei der bisherigen Salzlösezeit noch nicht erreicht wurde.

Ebenfalls alternativ oder zusätzlich kann zu diesem Zeitpunkt festgelegt werden, dass die anschließende Phase des Enthärtungsbetriebs 100 gegenüber einer Standard-Dauer verkürzt wird 242, um eine nur teilweise Wiederherstellung der Enthärtungskapazität der Enthärtungsvorrichtung im Regenerationszyklus 105 zu berücksichtigen. Die Verkürzung kann insbesondere proportional zum Unterschreiten von SW1 durch M_{RZ} erfolgen.

Sodann wird in die nächste Phase des Enthärtungsbetriebs 100 gewechselt.

Falls in Schritt 230 festgestellt wird, dass M_{RZ} nicht unter SW1 liegt, wird sodann geprüft, ob M_{RZ} über SW1 liegt 250. Falls ja, wird für den nächsten Regenerationszyklus vorgemerkt, dass in diesem eine kleinere Menge M1_{EZ} als im soeben beendeten Regenerationszyklus 101 eingesetzt werden soll 260. Typischerweise legt die elektronische Steuereinrichtung auch in diesem Fall den nächsten anzuwendenden Wert M1_{EZ} zu diesem Zeitpunkt quantitativ fest und speichert ihn ab. Sodann wird in die nächste Phase des Enthärtungsbetriebs 100 gewechselt.

Falls in Schritt 250 festgestellt werden sollte, das M_{RZ} auch nicht über SW1 liegt, so entspricht M_{RZ} aus dem gerade abgeschlossenen Regenerationszyklus 105 genau dem ersten Sollwert SW1 (wofür auch ein gewisses Intervall definiert **sein** kann), und es kann ohne Änderung für die Masse M1_{EZ} für den nächsten Regenerationszyklus in den Enthärtungsbetrieb 100 gewechselt werden.

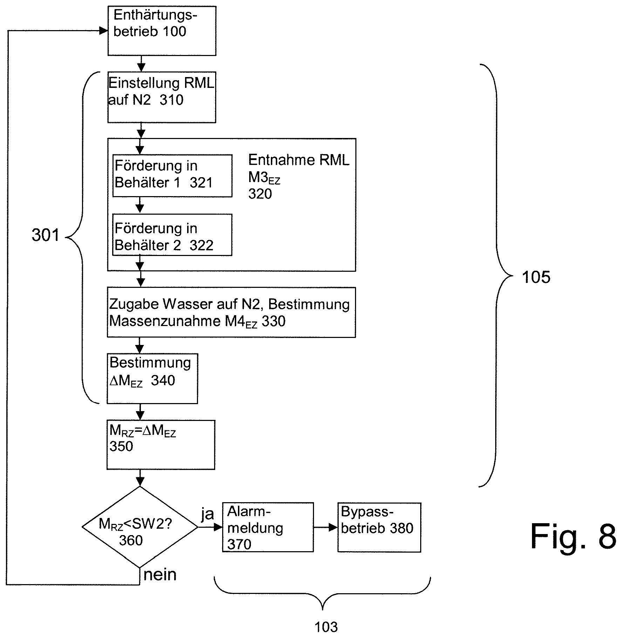

In **Fig. 8** wird eine dritte Variante eines erfindungsgemäßen Verfahrens zum Betrieb einer Wasserenthärtungsanlage vorgestellt. Es werden nur die wesentlichen Unterschiede zu den vorhergehenden Varianten dargestellt. In dieser Variante wechseln sich wiederum Enthärtungsbetrieb 100 und Regenerationszyklen 105 ab. In jedem Regenerationszyklus 105 ist hier jeweils nur ein Entnahmezyklus 301 vorgesehen.

In diesem Entnahmezyklus 301 erfolgt zunächst eine Einstellung der Regeneriermittellösung (RML) auf das Flüssigkeitsniveau N2 310, wofür nötigenfalls noch Wasser in das Vorratsgefäß zugegeben oder Regeneriermittellösung abgepumpt werden kann. Alternativ kann das derzeitige Flüssigkeitsniveau auch einfach als N2 festgelegt werden.

Sodann wird eine Masse M3_{EZ} von Regeneriermittellösung 320 aus dem Vorratsgefäß in die Enthärtungsvorrichtung gepumpt; die Masse M3_{EZ} bzw. deren Gewicht wird mit der Wiegeeinrichtung bestimmt. In der gezeigten Variante wird zunächst ein erster Teil der Masse M3_{EZ} dabei in einen ersten Behälter mit lonentauscherharz gefördert 321, um diesen zu regenerieren. Anschließend wird ein zweiter Teil der Masse M3_{EZ} in einen zweiten Behälter mit lonentauscherharz gefördert 322, um auch diesen zu regenerieren. Derjenige Behälter, der gerade nicht mit Regeneriermittellösung beaufschlagt wird, hält dabei eine Enthärtungsfunktion während des Regenerationszyklus 105 aufrecht.

Sodann erfolgt eine Zugabe von Wasser in das Vorratsgefäß, bis das Flüssigkeitsniveau N2 im Vorratsgefäß wieder erreicht ist 330. Dabei wird die Massenzunahme M4_{EZ} des Vorratsgefäßes mittels der Wiegeeinrichtung bestimmt.

Sodann wird die Differenz ΔM_{EZ}=M3_{EZ} - M4_{EZ} bestimmt 340. Diese Differenz ΔM_{EZ} entspricht dem bei der Regeneration insgesamt eingesetzten Salzmenge M_{RZ} 350. Alternativ kann ΔM_{EZ} bzw. M_{RZ} auch als Differenz der Massen des Vorratsgefäßes einschließlich seines Inhalts am Anfang von Schritt 320 und am Ende von Schritt 330 direkt bestimmt werden.

In der gezeigten Variante wird nun überprüft, ob M_{RZ} unter einem zweiten Sollwert SW2 liegt 360. Der zweite Sollwert definiert eine Mindestmenge an Salz, die für eine Teilregeneration der Enthärtungsvorrichtung zumindest benötigt wird, um eine gerade noch brauchbare Enthärtungsfunktion wiederherzustellen.

Solange noch festes Regeneriersalz im Vorratsgefäß vorhanden ist, wird bei der Durchführung des Regenerationszyklus 105 der zweite Sollwert SW2 durch M_{RZ} typischerweise nicht unterschritten; in diesem Fall kann davon ausgegangen werden, dass die Enthärtungsfunktion der Enthärtungsvorrichtung wieder ausreichend hergestellt worden ist, und in den Enthärtungsbetrieb 100 zurückgekehrt werden kann.

Falls der zweite Sollwert SW2 von M_{RZ} unterschritten wurde, kann die Enthärtungsfunktion nicht länger aufrechterhalten werden, und es wird in einen Sonderbetrieb 103 gewechselt. Dabei wird eine Alarmmeldung 370 ausgelöst, und beispielsweise ein Dauerwarnton an der elektronischen Steuereinrichtung erzeugt. Weiterhin wird in der gezeigten Variante die Wasserenthärtungsanlage in einen Bypass-Betrieb 380 überführt, in welchem die Enthärtungsvorrichtung abgesperrt ist, und ein Bypass bezüglich der Enthärtungsvorrichtung für das zufließende Rohwasser eingerichtet ist, so dass am Ausgang der Wasserenthärtungsanlage nicht enthärtetes Rohwasser direkt zur Verfügung gestellt wird. Erst nach einem Auffüllen von festem Regeneriersalz kann in einen Normalbetrieb (mit Regenerationszyklen 105 und Phasen des Enthärtungsbetriebs 100) zurück gewechselt werden, typischerweise beginnend mit einem Regenerationszyklus 105.

Zusammenfassend betrifft die Erfindung ein Verfahren zum Betrieb einer Wasserenthärtungsanlage (1), wobei eine Bestimmung der während eines einzelnen Regenerationszyklus (105) eingesetzten Menge an Regeneriersalz erfolgt. Ein Vorratsgefäß (7), welches festes Regeneriersalz (8) enthält, ist auf einer Wiegeeinrichtung (14) angeordnet. Im Rahmen eines Regenerationszyklus (105) wird in beliebiger Reihenfolge wenigstens einmal Regeneriermittellösung (9) aus dem Vorratsgefäß (7) entnommen, die der Enthärtungsvorrichtung (21) zugeführt wird, und wenigstens einmal Wasser in das Vorratsgefäß (7) nachgefüllt, so dass sich das Flüssigkeitsniveau (11) insgesamt nicht verändert. Die über den Regenerationszyklus (105) insgesamt erfolgte Massenabnahme, die auf dem Dichteunterschied von entnommener Regeneriermittellösung (9) und nachgefülltem Wasser beruht, wird mit der Wiegeeinrichtung (14) bestimmt und entspricht der im Regenerationszyklus (105) eingesetzten Salzmenge M_{RZ}. Die in einem Regenerationszyklus (105) entnommene Salzmenge M_{RZ} kann insbesondere als Summe der in allen Entnahmezyklen (101, 102; 301) des Regenerationszyklus (105) jeweils entnommenen Salzmengen ΔM_{EZ} bestimmt werden. Mit der Erfindung kann der Salzverbrauch eines Regenerationszyklus auf einfache Weise genau ermittelt werden.

### Bezugszeichenliste

- 1: Wasserenthärtungsanlage
- 2: Zulauf für Rohwasser
- 3: Ablauf für enthärtetes Wasser
- 4: Behälter
- 5: lonentauscherharz
- 6: elektronische Steuereinrichtung
- 7: Vorratsgefäß
- 8: festes Regeneriersalz
- 9: Regeneriermittellösung
- 10: Flüssigkeitsniveau N1
- 11: aktuelles Flüssigkeitsniveau Regeneriermittellösung
- 12: Schwimmerkörper
- 13: mechanisches Ventil
- 14: Wiegeeinrichtung
- 15: Absaug- und Nachfüllleitung
- 16: Pumpe
- 17: Leitung für Nachfüllwasser
- 18: Ventil für Nachfüllwasser
- 19: Ablauf verbrauchte Regeneriermittellösung
- 20: Abwasserkanal
- 21: Enthärtungsvorrichtung
- 100: Enthärtungsbetrieb
- 101: erster Entnahmezyklus
- 102: zweiter Entnahmezyklus
- 103: Sonderbetrieb
- 105: Regenerationszyklus
- 110: Einstellung RML auf N1
- 120: Zuführung Wasser der Masse M1_{EZ}
- 130: Entnahme RML auf N1, Bestimmung Massenverlust M2_{EZ}
- 140: Bestimmung ΔM_{EZ}
- 150: Prüfung ΔM_{EZ}<SW1?
- 160: Zuführung Wasser M1_{EZ}
- 170: Entnahme RML auf N1, Bestimmung Massenverlust M2_{EZ}
- 180: Bestimmung ΔM_{EZ}
- 190: Prüfung ∑ΔM_{EZ}<SW1?
- 200: M_{RZ}=∑ΔM_{EZ}
- 210: Lade Standardwert M1_{EZ}
- 220: M_{RZ}=ΔM_{EZ}
- 230: Prüfung M_{RZ}<SW1?
- 240: Erhöhe M1_{EZ} für nächsten RZ
- 241: Verlängere Salzlösezeit für nächsten RZ
- 242: Verkürze nächste Phase Enthärtungsbetrieb
- 250: Prüfung M_{RZ}>SW1?
- 260: Senke M1_{EZ} für nächste RZ
- 301: Entnahmezyklus
- 310: Einstellung RML auf N2
- 320: Entnahme RML M3_{EZ}
- 321: Förderung in Behälter 1
- 322: Förderung in Behälter 2
- 330: Zugabe Wasser auf N2, Bestimmung Massenzunahme M4_{EZ}
- 340: Bestimmung ΔM_{EZ}
- 350: M_{RZ}=ΔM_{EZ}
- 360: Prüfung M_{RZ}<SW2?
- 370: Alarmmeldung
- 380: Bypassbetrieb
- A: Schritt des Absaugens
- N: Schritt des Nachfüllens
- RML: Regeneriermittellösung
- RZ: Regenerationszyklus

## Patentansprüche

1. Verfahren zum Betrieb einer Wasserenthärtungsanlage (1),
wobei die Wasserenthärtungsanlage (1) umfasst
- eine Enthärtungsvorrichtung (21), insbesondere umfassend mindestens einen Behälter (4) mit einem lonentauscherharz (5),
- ein Vorratsgefäß (7) mit Regeneriermittellösung (9), wobei im Vorratsgefäß (7) festes Regeneriersalz (8) zur Herstellung der Regeneriermittellösung (9) bevorratet ist, und
- eine Wiegeeinrichtung (14) zur Bestimmung des Gewichts des Vorratsgefäßes (7) einschließlich seines Inhalts;
wobei in einem Regenerationszyklus (105) zur Regeneration der Enthärtungsvorrichtung (21) Regeneriermittellösung (9) aus dem Vorratsgefäß (7) entnommen und in die Enthärtungsvorrichtung (21) gefördert wird,
und wobei mit der Wiegeeinrichtung (14) das Gewicht des Vorratsgefäßes (7) einschließlich seines Inhalts bestimmt wird, **dadurch gekennzeichnet, dass** die Wasserenthärtungsanlage (1) eine Vorrichtung zur Erfassung und/oder Einstellung eines Flüssigkeitsniveaus im Vorratsgefäß aufweist, wobei im Rahmen des Regenerationszyklus (105) wenigstens einmal Regeneriermittellösung aus dem Vorratsgefäß (7) entnommen wird und wenigstens einmal dem Vorratsgefäß (7) Wasser zugeführt wird, so dass sich das Flüssigkeitsniveau (10,11) im Vorratsgefäß (7) insgesamt nicht verändert und am Ende des Regenerationszyklus (105) dasselbe Flüssigkeitsniveau (10, 11) im Vorratsbehälter (7) erreicht ist wie am Anfang des Regenerationszyklus (105),
und dass eine in diesem Regenerationszyklus (105) für die Regeneration eingesetzte Salzmenge M_{RZ} entsprechend der Differenz der Massen des Vorratsbehälters (7) einschließlich seines Inhalts am Anfang des Regenerationszyklus (105) und am Ende des Regenerationszyklus (105) ermittelt wird, indem eine über den Regenerationszyklus (105) insgesamt erfolgte Massenabnahme, die auf dem Dichteunterschied von entnommener Regeneriermittellösung (9) und nachgefülltem Wasser beruht, mit der Wiegeeinrichtung (14) bestimmt wird.

2. Verfahren nach Anspruch 1, **dadurch gekennzeichnet, dass** der Regenerationszyklus (105) einen oder mehrere Entnahmezyklen (101, 102; 301) umfasst,
wobei ein Entnahmezyklus (101, 102) folgende Schritte umfasst:
E1.1) ein Flüssigkeitsniveau N1 (10) von Regeneriermittellösung (9) im Vorratsgefäß (7) wird eingestellt oder erfasst (110, 130),
E1.2) dem Vorratsgefäß (7) wird eine Masse M1_{EZ} an Wasser zugeführt (120, 160), wobei das Flüssigkeitsniveau (11) im Vorratsgefäß (7) ansteigt,
E1.3) dem Vorratsgefäß (7) wird so viel Regeneriermittellösung (9) entnommen, bis das Flüssigkeitsniveau N1 (10) wieder erreicht ist, wobei mit dieser Entnahme ein Massenverlust M2_{EZ} des Vorratsbehälters (7) einschließlich seines Inhalts einhergeht (130, 170),
oder wobei ein Entnahmezyklus (301) folgende Schritte umfasst:
E2.1) ein Flüssigkeitsniveau N2 von Regeneriermittellösung (9) im Vorratsgefäß (7) wird eingestellt oder erfasst (310),
E2.2) eine Masse M3_{EZ} an Regeneriermittellösung (9) wird aus dem Vorratsgefäß (7) entnommen (320), wobei das Flüssigkeitsniveau (11) im Vorratsgefäß (7) absinkt,
E2.3) dem Vorratsgefäß (7) wird so viel Wasser zugeführt, bis das Flüssigkeitsniveau N2 wieder erreicht ist, wobei mit dieser Zuführung eine Massenzunahme M4_{EZ} des Vorratsbehälters (7) einschließlich seines Inhalts einhergeht (330).

3. Verfahren nach Anspruch 2, **dadurch gekennzeichnet,**
**dass** in einem Entnahmezyklus (101, 102) nach Schritt E1.3) folgt:
E1.4) eine in diesem Entnahmezyklus (101, 102) für die Regeneration eingesetzte Salzmenge entsprechend der Differenz ΔM_{EZ} der Massen des Vorratsbehälters (7) einschließlich seines Inhalts am Anfang von Schritt E1.2) und am Ende von Schritt E1.3) wird ermittelt, insbesondere wobei ΔM_{EZ} berechnet wird mit ΔM_{EZ} = M2_{EZ}-M1_{EZ} (140, 180),
oder in einem Entnahmezyklus (301) nach Schritt E2.3) folgt:
E2.4) eine in diesem Entnahmezyklus (301) für die Regeneration eingesetzte Salzmenge entsprechend der Differenz ΔM_{EZ} der Massen des Vorratsbehälters (7) einschließlich seines Inhalts am Anfang von Schritt E2.2) und am Ende von Schritt E2.3) wird ermittelt, insbesondere wobei ΔM_{EZ} berechnet wird mit ΔM_{EZ} = M3_{EZ}-M4_{EZ} (340), insbesondere wobei aus der Summe der Differenzen ΔM_{EZ} aller Entnahmezyklen (101, 102; 301) des Regenerationszyklus (105) die in dem Regenerationszyklus (105) für die Regeneration eingesetzte Salzmenge M_{RZ} ermittelt wird (200; 220; 350).

4. Verfahren nach Anspruch 2 oder 3, **dadurch gekennzeichnet, dass** zur Steuerung einer in dem Regenerationszyklus (105) für die Regeneration eingesetzte Salzmenge M_{RZ} eine Masse M1_{RZ} und/oder eine Masse M3_{RZ} eingestellt wird,
mit M1_{RZ}: Summe der Massen M1_{EZ} aller Entnahmezyklen (101, 102; 301) des Regenerationszyklus (105), und M3_{RZ}: Summe der Massen M3_{EZ} aller Entnahmezyklen (101, 102; 301) des Regenerationszyklus (105).

5. Verfahren nach einem der vorhergehenden Ansprüche, **dadurch gekennzeichnet,**
**dass** das Verfahren mehrere Regenerationszyklen (105) umfasst, insbesondere wobei die Regenerationszyklen (105) sich mit Phasen eines Enthärtungsbetriebs (100) der Wasserenthärtungsanlage (1) abwechseln, in denen durch die Enthärtungsvorrichtung (21) fließendes Wasser enthärtet wird,
**dass** ein erster Sollwert SW1 für eine pro Regenerationszyklus (105) für die Regeneration einzusetzende Salzmenge definiert ist,
und **dass** Verfahrensparameter, insbesondere die Massen M1_{EZ} und/oder M3_{EZ} in den Entnahmezyklen (101, 102; 301), so angepasst werden, insbesondere iterativ angepasst werden, dass die Salzmengen M_{RZ} der Regenerationszyklen (105) auf den ersten Sollwert SW1 eingeregelt werden (240, 260).

6. Verfahren nach Anspruch 5 und nach Anspruch 2, **dadurch gekennzeichnet, dass** bei Überschreiten des ersten Sollwerts SW1 durch die Salzmenge M_{RZ} eines letzten Regenerationszyklus (105) in einem oder mehreren nachfolgenden Regenerationszyklen (105)
- eine Masse M1_{RZ} gegenüber dem letzten Regenerationszyklus (105) verringert wird (260) und/oder
- eine Masse M3_{RZ} gegenüber dem letzten Regenerationszyklus (105) verringert wird,
mit M1_{RZ}: Summe der Massen M1_{EZ} aller Entnahmezyklen (101, 102; 301) des Regenerationszyklus (105), und M3_{RZ}: Summe der Massen M3_{EZ} aller Entnahmezyklen (101, 102; 301) des Regenerationszyklus (105).

7. Verfahren nach einem der Ansprüche 5 bis 6 und nach Anspruch 2, **dadurch gekennzeichnet, dass** bei Unterschreiten des ersten Sollwerts SW1 durch die Salzmenge M_{RZ} eines letzten Regenerationszyklus (105) in einem oder mehreren nachfolgenden Regenerationszyklen (105)
- eine Masse M1_{RZ} gegenüber dem letzten Regenerationszyklus (105) erhöht wird (240) und/oder
- eine Masse M3_{RZ} gegenüber dem letzten Regenerationszyklus (105) erhöht wird,
mit M1_{RZ}: Summe der Massen M1_{EZ} aller Entnahmezyklen (101, 102; 301) des Regenerationszyklus (105), und M3_{RZ}: Summe der Massen M3_{EZ} aller Entnahmezyklen (101, 102; 301) des Regenerationszyklus (105).

8. Verfahren nach einem der Ansprüche 5 bis 7, **dadurch gekennzeichnet, dass** bei Unterschreiten des ersten Sollwerts SW1 durch die Salzmenge M_{RZ} eines letzten Regenerationszyklus (105) die Dauer einer darauffolgenden Phase eines Enthärtungsbetriebs (100) gegenüber einer Standard-Dauer einer Phase des Enthärtungsbetriebs (100), die ohne Unterschreiten des Sollwerts SW1 angewandt würde, verkürzt wird (242).

9. Verfahren nach einem der Ansprüche 5 bis 8 und nach Anspruch 3, **dadurch gekennzeichnet, dass** in einem Regenerationszyklus (105) nach Durchlaufen eines jeweiligen Entnahmezyklus (101, 102; 301) die Summe der Differenzen ΔM_{EZ} aller bisherigen Entnahmezyklen (101, 102; 301) des Regenerationszyklus (105) mit dem ersten Sollwert SW1 vergleichen wird (150, 190), und bei Unterschreiten des ersten Sollwerts SW1 noch ein weiterer Entnahmezyklus (101, 102; 301) angeschlossen wird, bis der Sollwert SW1 erreicht ist.

10. Verfahren nach einem der Ansprüche 5 bis 9, **dadurch gekennzeichnet, dass** bei Unterschreiten des ersten Sollwerts SW1 durch die Salzmenge M_{RZ} eines letzten Regenerationszyklus (105) für einen oder mehrere nachfolgende Regenerationszyklen (105) eine Salzlösezeit, insbesondere von einer Zuführung von Wasser gemäß E1.2) (120, 160) oder E2.3) (330) bis zur nächsten Entnahme von Regeneriermittellösung (9) aus dem Vorratsbehälter (7) gemäß E1.3) (130, 170) oder E2.2) (320), gegenüber einer zuletzt angewandten Salzlösezeit verlängert wird (241).

11. Verfahren nach einem der vorhergehenden Ansprüche, **dadurch gekennzeichnet, dass** ein zweiter Sollwert SW2 für eine pro Regenerationszyklus (105) für die Regeneration einzusetzende Salzmenge definiert ist, und bei Unterschreiten des zweiten Sollwerts SW2 durch die Salzmenge M_{RZ} eines letzten Regenerationszyklus (105) ein Normalbetrieb, in welchem sich Regenerationszyklen (105) und Phasen des Enthärtungsbetriebs (100) der Wasserbehandlungsanlage (1) abwechseln, beendet wird und in einen Sonderbetrieb (103) gewechselt wird.

12. Verfahren nach Anspruch 11, **dadurch gekennzeichnet, dass** im Sonderbetrieb (103) die Enthärtungsvorrichtung (21) für eine Enthärtung von Wasser gesperrt ist,
insbesondere wobei die Enthärtungsvorrichtung (21) mit einem Bypass umgangen wird (380) und/oder die Enthärtungsvorrichtung (21) mit einer Konservierlösung befüllt wird.

13. Verfahren nach Anspruch 11 oder 12, **dadurch gekennzeichnet, dass** der Wechsel in den Sonderbetrieb (103) und/oder der Zustand des Sonderbetriebs (103) durch eine oder mehrere Alarmmeldungen (370) angezeigt wird, insbesondere optisch und/oder akustisch und/oder elektronisch, etwa an eine Leitwarte, und/oder per Funk, etwa an ein Mobiltelefon.

14. Verfahren nach einem der vorhergehenden Ansprüche, **dadurch gekennzeichnet,**
**dass** mit der Wiegeeinrichtung (14) das Gewicht m des Vorratsgefäßes (7) einschließlich seines Inhalts als Funktion der Zeit t mitverfolgt wird und ein zeitlicher Gradient des Gewichts dm/dt bestimmt wird,
**dass** für eine oder mehrere Betriebssituationen Grenzwerte oder Soll-Intervalle für den Gradienten dm/dt definiert sind,
und **dass** eine Fehlfunktion der Wasserenthärtungsanlage (1) festgestellt wird, wenn der Gradient dm/dt in einer Betriebssituation einen zugehörigen Grenzwert oder ein zugehöriges Soll-Intervall verletzt.

15. Verfahren nach Anspruch 14, **dadurch gekennzeichnet, dass** für Zeiten einer Entnahme von Regeneriermittellösung (9) aus dem Vorratsgefäß (7), insbesondere für die Schritte E1.3) (130, 170) und/oder E2.2) (320), ein Mindest-Absolutbetrag MINB des Gradienten dm/dt festgelegt ist, bei dessen Unterschreiten eine Fehlfunktion der Regeneriermittelförderung aus dem Vorratsgefäß (21) festgesellt wird,
und/oder dass in einer Phase eines Enthärtungsbetriebs (100) ein Maximal-Absolutbetrag MAXB des Gradienten dm/dt festgelegt ist, bei dessen Überschreiten eine Undichtigkeit des Vorratsgefäßes (7) festgestellt wird.

16. Verfahren nach einem der vorhergehenden Ansprüche, **dadurch gekennzeichnet, dass** das Flüssigkeitsniveau (10, 11) im Vorratsgefäß (7), insbesondere das Flüssigkeitsniveau N1 (10) in E1.3) (130, 170) und/oder das Flüssigkeitsniveau N2 in E2.3) (330), (330), eingestellt wird, indem ein mechanisches Ventil (13) mittels eines Schwimmkörpers (12), der auf der Regeneriermittellösung (9) im Vorratsgefäß (7) schwimmt, betätigt wird, insbesondere wobei das mechanische Ventil (13) in oder an einer Zuführ- und/oder Entnahmeleitung (15) im Vorratsgefäß (7) angeordnet ist.

17. Verfahren nach einem der vorhergehenden Ansprüche, **dadurch gekennzeichnet, dass** mit der Wiegeeinrichtung (14) das Gewicht m des Vorratsgefäßes (7) einschließlich seines Inhalts als Funktion der Zeit t mitverfolgt wird,
und dass ein Abschluss einer Entnahme von Regeneriermittellösung (9), insbesondere gemäß E1.3) (130, 170), und/oder ein Abschluss eines Zuführens von Wasser, insbesondere gemäß E2.3) (330), aus dem zeitlichen Verlauf m(t) bestimmt wird, insbesondere wobei der Abschluss über den zeitlicher Gradienten dm/dt bestimmt wird.

18. Verfahren nach einem der vorhergehenden Ansprüche, **dadurch gekennzeichnet,**
**dass** die Enthärtungsvorrichtung (21) mehrere Behälter (4) mit lonentauscherharz (5) umfasst,
und **dass** die Behälter (4) im selben Regenerationszyklus (105) regeneriert werden.

19. Verfahren nach Anspruch 18 und nach Anspruch 2, **dadurch gekennzeichnet, dass** in Schritt E1.3) (130, 170) und/oder in Schritt E2.2) (320) aus dem Vorratsgefäß (7) entnommene Regeneriermittellösung (9) nacheinander in unterschiedliche Behälter (4) gefördert wird (321, 322), insbesondere wobei Behälter (4), in die in Schritt E1.3) (130, 170) und/oder Schritt E2.2) (320) gerade keine Regeneriermittellösung (9) gefördert wird, während Schritt E1.3) (130, 170) und/oder Schritt E2.2) (320) eine Enthärtungsfunktion für durch die Wasserenthärtungsanlage (1) fließendes Wasser aufrechterhalten.

20. Wasserenthärtungsanlage (1), umfassend
- eine Enthärtungsvorrichtung (21), insbesondere umfassend mindestens einen Behälter (4) mit einem lonentauscherharz (5),
- ein Vorratsgefäß (7) mit Regeneriermittellösung (9), wobei im Vorratsgefäß (7) festes Regeneriersalz (8) enthalten ist, und
- eine Wiegeeinrichtung (14) zur Bestimmung des Gewichts des Vorratsgefäßes (7) einschließlich seines Inhalts,
**dadurch gekennzeichnet,**
**dass** die Wasserenthärtungsanlage (1) ausgebildet ist zur Durchführung eines Verfahrens nach einem der vorhergehenden Ansprüche,
wobei die Wasserenthärtungsanlage (1) eine Vorrichtung zur Erfassung und/oder Einstellung eines Flüssigkeitsniveaus (10, 11) im Vorratsgefäß (7), insbesondere des Flüssigkeitsniveaus N1 (10) und/oder des Flüssigkeitsniveaus N2, aufweist,
und wobei die Wasserenthärtungsanlage (1) eine elektronische Steuereinrichtung (6) zur automatischen Durchführung des oder der Regenerationszyklen (105) umfasst.

## Claims

1. Method for the operation of a water softening installation (1), wherein the water softening installation (1) comprises
- a softening device (21), in particular comprising at least one container (4) containing an ion exchange resin (5),
- a storage vessel (7) with regenerant solution (9), wherein solid regenerating salt (8) for the preparation of the regenerant solution (9) is stored in the storage vessel (7), and
- a weighing device (14) for the determination of the weight of the storage vessel (7) including its contents;
wherein in a regeneration cycle (105) for the regeneration of the softening device (21), regenerant solution (9) is extracted from the storage vessel (7) and conveyed into the softening device (21),
and wherein the weight of the storage vessel (7) including its contents is determined using the weighing device (14),
**characterised in that**
the water softening installation (1) has a device for the detection and/or adjustment of a liquid level in the storage vessel, wherein during the regeneration cycle (105), regenerant solution is extracted from the storage vessel (7) at least once and water is fed into the storage vessel (7) at least once, so that the liquid level (10, 11) in the storage vessel (7) does not change overall and at the end of the regeneration cycle (105), the same liquid level (10, 11) is attained in the storage vessel (7) as at the beginning of the regeneration cycle (105),
and **in that** a quantity of salt M_{RZ} used for regeneration in this regeneration cycle (105) is determined according to the difference in the masses of the storage vessel (7) including its contents at the beginning of the regeneration cycle (105) and at the end of the regeneration cycle (105) by determining, using the weighing device (14), a total mass decrease over the regeneration cycle (105), which is based on the difference in density between the extracted regenerant solution (9) and the replenished water.

2. Method according to claim 1, **characterised in that** the regeneration cycle (105) comprises one or more extraction cycles (101, 102; 301),
wherein an extraction cycle (101, 102) comprises the following steps:
E1.1) a liquid level N1 (10) of regenerant solution (9) in the storage vessel (7) is adjusted or detected (110, 130),
E1.2) a mass M1_{EZ} of water is supplied (120, 160) to the storage vessel (7), wherein the liquid level (11) in the storage vessel (7) rises,
E1.3) a quantity of regenerant solution (9) is extracted from the storage vessel (7) until the liquid level N1 (10) is attained again, wherein this extraction is accompanied by a loss of mass M2_{EZ} of the storage vessel (7) including its contents (130, 170),
or wherein an extraction cycle (301) comprises the following steps:
E2.1) a liquid level N2 of regenerant solution (9) in the storage vessel (7) is adjusted or detected (310),
E2.2) a mass M3_{EZ} of regenerant solution (9) is extracted (320) from the storage vessel (7), wherein the liquid level (11) in the storage vessel (7) decreases,
E2.3) a quantity of water is supplied to the storage vessel (7) until the liquid level N2 is attained again, wherein this supply is accompanied by an increase in mass M4_{EZ} of the storage vessel (7) including its contents (330).

3. Method according to claim 2, **characterised in that**
after step E1.3), the following occurs in an extraction cycle (101, 102):
E1.4) a quantity of salt used for regeneration in this extraction cycle (101, 102) is determined according to the difference ΔM_{EZ} of the masses of the storage vessel (7) including its contents at the beginning of step E1.2) and at the end of step E1.3), in particular wherein ΔM_{EZ} is calculated with ΔM_{EZ} = M2_{EZ} - M1_{EZ} (140, 180),
or after step E2.3), the following occurs in an extraction cycle (301):
E2.4) a quantity of salt used in this extraction cycle (301) for regeneration corresponding to the difference ΔM_{EZ} of the masses of the storage vessel (7) including its contents at the beginning of step E2.2) and at the end of step E2.3) is determined, in particular wherein ΔM_{EZ} is calculated with ΔM_{EZ} = M3_{EZ} - M4_{EZ} (340),
in particular wherein the quantity of salt M_{RZ} used for regeneration in the regeneration cycle (105) is determined (200; 220; 350) from the sum of the differences ΔM_{EZ} of all extraction cycles (101, 102; 301) of the regeneration cycle (105).

4. Method according to claim 2 or 3, **characterised in that** a mass M1_{RZ} and/or a mass M3_{RZ} is set for controlling a quantity of salt M_{RZ} used in the regeneration cycle (105) for regeneration,
where M1_{RZ} is the sum of the masses M1_{EZ} of all extraction cycles (101, 102; 301) of the regeneration cycle (105), and M3_{RZ} is the sum of the masses M3_{EZ} of all extraction cycles (101, 102; 301) of the regeneration cycle (105).

5. Method according to any one of the preceding claims, **characterised in that**
the method comprises a plurality of regeneration cycles (105), in particular wherein the regeneration cycles (105) alternate with phases of a softening operation (100) of the water softening installation (1), in which water flowing through the softening device (21) is softened,
**in that** a first setpoint SW1 is defined for a quantity of salt to be used for regeneration per regeneration cycle (105),
and **in that** process parameters, in particular the masses M1_{EZ} and/or M3_{EZ} in the extraction cycles (101, 102; 301), are adapted, in particular iteratively adapted, such that the quantities of salt M_{RZ} of the regeneration cycles (105) are adjusted to the first setpoint value SW1 (240, 260).

6. Method according to claim 5 and according to claim 2, **characterised in that** when the quantity of salt M_{RZ} of a last regeneration cycle (105) in one or more subsequent regeneration cycles (105) exceeds the first setpoint SW1,
- a mass M1_{RZ} is reduced (260) relative to the last regeneration cycle (105) and/or
- a mass M3_{RZ} is reduced relative to the last regeneration cycle (105),
where M1_{RZ} is the sum of the masses M1_{EZ} of all extraction cycles (101, 102; 301) of the regeneration cycle (105), and M3_{RZ} is the sum of the masses M3_{EZ} of all extraction cycles (101, 102; 301) of the regeneration cycle (105).

7. Method according to any one of claims 5 to 6 and according to claim 2, **characterised in that** when the quantity of salt M_{RZ} of a last regeneration cycle (105) undershoots the first setpoint SW1, then in one or more subsequent regeneration cycles (105)
- a mass M1_{RZ} is increased (240) relative to the last regeneration cycle (105) and/or
- a mass M3_{EZ} is increased relative to the last regeneration cycle (105), where M1_{RZ} is the sum of the masses M1_{EZ} of all extraction cycles (101, 102; 301) of the regeneration cycle (105), and M3_{RZ} is the sum of the masses M3_{EZ} of all extraction cycles (101, 102; 301) of the regeneration cycle (105).

8. Method according to any one of claims 5 to 7, **characterised in that** when the quantity of salt M_{RZ} of a last regeneration cycle (105) undershoots the first setpoint SW1, then the duration of a subsequent phase of a softening operation (100) is shortened (242) relative to a standard duration of a phase of the softening operation (100) which would be applied without undershooting the setpoint SW1.

9. Method according to any one of claims 5 to 8 and according to claim 3, **characterised in that** in a regeneration cycle (105), after the performance of a respective extraction cycle (101, 102; 301), the sum of the differences ΔM_{EZ} of all previous extraction cycles (101, 102; 301) of the regeneration cycle (105) is compared (150, 190) with the first setpoint SW1, and if the value undershoots the first setpoint SW1, a further extraction cycle (101, 102; 301) is added until the setpoint SW1 is reached.

10. Method according to any one of claims 5 to 9, **characterised in that** when the first setpoint SW1 is undershot by the quantity of salt M_{RZ} of a last regeneration cycle (105), then for one or more subsequent regeneration cycles (105) a salt dissolution time, in particular from a supply of water according to E1. 2) (120, 160) or E2.3) (330) until the next extraction of regenerant solution (9) from the storage vessel (7) according to E1.3) (130, 170) or E2.2) (320), is prolonged compared to a last-applied salt dissolution time (241).

11. Method according to any one of the preceding claims, **characterised in that** a second setpoint SW2 is defined for a quantity of salt to be used for regeneration per regeneration cycle (105), and when the second setpoint SW2 is undershot by the quantity of salt M_{RZ} of a last regeneration cycle (105), then a normal mode, in which regeneration cycles (105) and phases of the softening operation (100) of the water treatment installation (1) alternate, is terminated and changed to a special mode (103).

12. Method according to claim 11, **characterised in that** in special mode (103) the softening device (21) is inhibited for the softening of water,
in particular wherein the softening device (21) is bypassed (380) and/or the softening device (21) is filled with a preservative solution.

13. Method according to claim 11 or 12, **characterised in that** the change to the special mode (103) and/or the state of the special mode (103) is indicated by one or more alarm messages (370), in particular optically and/or acoustically and/or electronically, for example to a control room, and/or by radio, for example to a mobile telephone.

14. Method according to any one of the preceding claims, **characterised in that** using the weighing device (14), the weight m of the storage vessel (7) including its contents is tracked as a function of time t and a time gradient of the weight dm/dt is determined,
**in that** limit values or target intervals for the gradient dm/dt are defined for one or more operating situations,
and **in that** a malfunction of the water softening installation (1) is detected if the gradient dm/dt violates an associated limit value or an associated target interval in an operating situation.

15. Method according to claim 14, **characterised in that** a minimum absolute value MINB of the gradient dm/dt is defined for times when regenerant solution (9) is withdrawn from the storage vessel (7), in particular for the steps E1.3) (130, 170) and/or E2.2) (320), below which a malfunction of the regenerant delivery from the storage vessel (21) is detected,
and/or **in that** a maximum absolute value MAXB of the gradient dm/dt is defined in a phase of a softening operation (100), above which a leakage of the storage vessel (7) is detected.

16. Method according to any one of the preceding claims, **characterised in that** the liquid level (10, 11) in the storage vessel (7), in particular the liquid level N1 (10) in E1.3) (130, 170) and/or the liquid level N2 in E2. 3) (330), (330), is adjusted by actuating a mechanical valve (13) by means of a floating body (12) which floats on the regenerant solution (9) in the storage vessel (7), in particular wherein the mechanical valve (13) is arranged in or on a supply and/or extraction line (15) in the storage vessel (7).

17. Method according to any one of the preceding claims, **characterised in that** using the weighing device (14), the weight m of the storage vessel (7), including its contents, is tracked using the weighing device (14) as a function of the time t,
and **in that** a termination of an extraction of regenerant solution (9), in particular according to E1.3) (130, 170), and/or a termination of a supply of water, in particular according to E2.3) (330), is determined from the time course m(t), in particular wherein the termination is determined via the time gradient dm/dt.

18. Method according to any one of the preceding claims, **characterised in that**
the softening device (21) comprises a plurality of containers (4) containing ion exchange resin (5),
and **in that** the containers (4) are regenerated in the same regeneration cycle (105).

19. Method according to claim 18 and according to claim 2, **characterised in that** in step E1.3) (130, 170) and/or in step E2.2) (320) regenerant solution (9) taken from the storage vessel (7) is successively conveyed (321, 322) into different containers (4),
in particular wherein containers (4), into which no regenerant solution (9) is currently being conveyed in step E1.3) (130, 170) and/or step E2.2) (320), maintain a softening function for water flowing through the water softening installation (1) during step E1.3) (130, 170) and/or step E2.2) (320).

20. Water softening installation (1) comprising
- a softening device (21), in particular comprising at least one container (4) with an ion exchange resin (5),
- a storage vessel (7) with regenerant solution (9), wherein solid regenerant salt (8) is contained in the storage vessel (7), and
- a weighing device (14) for the determination of the weight of the storage vessel (7), including its contents,
**characterised in that**
the water softening installation (1) is configured to perform a method according to any one of the preceding claims,
wherein the water softening installation (1) has a device for the detection and/or adjustment of a liquid level (10, 11) in the storage vessel (7), in particular the liquid level N1 (10) and/or the liquid level N2;
and wherein the water softening installation (1) comprises an electronic control device (6) for the automatic execution of the regeneration cycle or cycles (105).

## Revendications

1. Procédé de fonctionnement d'une installation d'adoucissement d'eau (1), dans lequel l'installation d'adoucissement d'eau (1) comprend
- un dispositif d'adoucissement (21), en particulier comprenant au moins un contenant (4) avec une résine échangeuse d'ions (5),
- une cuve de réserve (7) avec une solution de régénérant (9), dans lequel un sel régénérant solide (8) est stocké dans la cuve de réserve (7) pour la production de la solution de régénérant (9), et
- un appareil de pesage (14) pour déterminer le poids de la cuve de réserve (7) incluant de son contenu ;
dans lequel dans un cycle de régénération (105) pour la régénération du dispositif d'adoucissement (21), de la solution de régénérant (9) est prélevée de la cuve de réserve (7) et est acheminée dans le dispositif d'adoucissement (21),
et dans lequel avec l'appareil de pesage (14), le poids de la cuve de réserve (7) incluant de son contenu est déterminé,
**caractérisé en ce que**
l'installation d'adoucissement d'eau (1) présente un dispositif de saisie et/ou d'ajustement d'un niveau de liquide dans la cuve de réserve, dans lequel dans le cadre du cycle de régénération (105), de la solution de régénérant est prélevée au moins une fois de la cuve de réserve (7) et de l'eau est acheminée au moins une fois à la cuve de réserve (7), de sorte que le niveau de liquide (10, 11) ne soit globalement pas modifié dans la cuve de réserve (7) et qu'à la fin du cycle de régénération (105), le même niveau de liquide (10, 11) soit atteint dans le contenant de réserve (7) comme au début du cycle de régénération (105),
et **en ce qu'**une quantité de sel M_{RZ} utilisée pour la régénération dans ce cycle de régénération (105) correspondant à la différence des masses du contenant de réserve (7) incluant son contenu au début du cycle de régénération (105) et à la fin du cycle de régénération (105) soit déterminée, en évaluant une diminution de masse survenue globalement sur le cycle de régénération (105) qui s'appuie sur la base de la différence de densité de la solution de régénérant prélevée (9) et de l'eau ajoutée, avec l'appareil de pesage (14).

2. Procédé selon la revendication 1, **caractérisé en ce que** le cycle de régénération (105) comprend un ou plusieurs cycles de prélèvement (101 ; 102 ; 301),
dans lequel un cycle de prélèvement (101, 102) comprend les étapes suivantes :
E1.1) un niveau de liquide N1 (10) de la solution de régénérant (9) dans la cuve de réserve (7) est ajusté ou saisi (110, 130),
E1.2) une masse M1_{EZ} d'eau est acheminée (120, 160) à la cuve de réserve (7), dans lequel le niveau de liquide (11) augmente dans la cuve de réserve (7),
E1.3) de la solution de régénérant (9) est retirée de la cuve de réserve (7) en une quantité telle que le niveau de liquide N1 (10) soit à nouveau atteint, dans lequel ce prélèvement s'accompagne d'une perte de masse M2_{EZ} du contenant de réserve (7) incluant de son contenu (130, 170),
ou dans lequel un cycle de prélèvement (301) comprend les étapes suivantes :
E2.1) un niveau de liquide N2 de la solution de régénérant (9) est ajusté ou saisi (310) dans la cuve de réserve (7),
E2.2) une masse M3_{EZ} de solution de régénérant (9) est prélevée (320) de la cuve de réserve (7), dans lequel le niveau de liquide (11) baisse dans la cuve de réserve (7),
E2.3) de l'eau est acheminée à la cuve de réserve (7) en une quantité telle que le niveau de liquide N2 soit à nouveau atteint, dans lequel cet apport s'accompagne d'une augmentation de masse M4_{EZ} du contenant de réserve (7) incluant de son contenu (330).

3. Procédé selon la revendication 2, **caractérisé en ce que**, dans un cycle de prélèvement (101, 102) après l'étape E1.3) suit :
E1.4) une quantité de sel utilisée dans ce cycle de prélèvement (101, 102) pour la régénération correspondant à la différence ΔM_{EZ} de masses du contenant de réserve (7) incluant de son contenu au début de l'étape E1.2) et à la fin de l'étape E1.3) est déterminée, en particulier dans lequel ΔM_{EZ} est calculé avec ΔM_{EZ} = M2_{EZ} - M1_{EZ} (140, 180), ou dans un cycle de prélèvement (301) après l'étape E2.3) suit :
E2.4) une quantité de sel utilisée dans ce cycle de prélèvement (301) pour la régénération correspondant à la différence ΔM_{EZ} de masses du contenant de réserve (7) incluant de son contenu au début de l'étape E2.2) et à la fin de l'étape E2.3) est déterminée, en particulier dans lequel ΔM_{EZ} est calculé avec ΔM_{EZ} = M3_{EZ} - M4_{EZ} (340),
en particulier dans lequel à partir de la somme des différences ΔM_{EZ} de tous les cycles de prélèvement (101, 102 ; 301) du cycle de régénération (105), la quantité de sel M_{RZ} utilisée dans le cycle de régénération (105) pour la régénération est déterminée (200 ; 220; 350).

4. Procédé selon la revendication 2 ou 3, **caractérisé en ce que** pour la commande d'une quantité de sel M_{RZ} utilisée dans le cycle de régénération (105) pour la régénération, une masse M1_{RZ} et/ou une masse M3_{RZ} est ajustée,
avec M1_{RZ} : somme des masses M1_{EZ} de tous les cycles de prélèvement (101, 102 ; 301) du cycle de régénération (105), et M3_{RZ} : somme des masses M3_{EZ} de tous les cycles de prélèvement (101, 102 ; 301) du cycle de régénération (105).

5. Procédé selon l'une quelconque des revendications précédentes, **caractérisé en ce que**
le procédé comprend plusieurs cycles de régénération (105), en particulier dans lequel les cycles de régénération (105) alternent avec des phases d'une activité d'adoucissement (100) de l'installation d'adoucissement d'eau (1), dans lesquelles de l'eau courante est adoucie par le dispositif d'adoucissement (21),
**en ce qu'**une première valeur de consigne SW1 pour une quantité de sel à utiliser par cycle de régénération (105) pour la régénération est définie,
et **en ce que** des paramètres du procédé, en particulier les masses M1_{EZ} et/ou M3_{EZ} dans les cycles de prélèvement (101 ; 102 ; 301) sont adaptées, en particulier adaptées de façon itérative, de telle sorte que les quantités de sel M_{RZ} des cycles de régénération (105) sont régulées (240, 260) sur la première valeur de consigne SW1.

6. Procédé selon la revendication 5 et selon la revendication 2, **caractérisé en ce qu'**en cas de dépassement vers le haut de la première valeur de consigne SW1 par la quantité de sel M_{RZ} d'un dernier cycle de régénération (105) dans un ou plusieurs cycles de régénérations consécutifs (105)
- une masse M1_{RZ} est réduite (260) par rapport au dernier cycle de régénération (105) et/ou
- une masse M3_{RZ} est réduite par rapport au dernier cycle de régénération (105),
avec M1_{RZ} : somme des masses M1_{EZ} de tous les cycles de prélèvement (101, 102 ; 301) du cycle de régénération (105), et M3_{RZ} : somme des masses M3_{EZ} de tous les cycles de prélèvement (101, 102 ; 301) du cycle de régénération (105).

7. Procédé selon l'une quelconque des revendications 5 à 6 et selon la revendication 2, **caractérisé en ce qu'**en cas de dépassement vers le bas de la première valeur théorique SW1 par la quantité de sel M_{RZ} d'un dernier cycle de régénération (105) dans un ou plusieurs cycles de régénération consécutifs (105)
- une masse M1_{RZ} est augmentée (240) par rapport au dernier cycle de régénération (105) et/ou
- une masse M3_{RZ} est augmentée par rapport au dernier cycle de régénération (105),
avec M1_{RZ} : somme des masses M1_{EZ} de tous les cycles de prélèvement (101, 102 ; 301) du cycle de régénération (105), et M3_{RZ} : somme des masses M3_{EZ} de tous les cycles de prélèvement (101, 102 ; 301) du cycle de régénération (105).

8. Procédé selon l'une quelconque des revendications 5 à 7, **caractérisé en ce qu'**en cas de dépassement vers le bas de la première valeur de consigne SW1 par la quantité de sel M_{RZ} d'un dernier cycle de régénération (105), la durée d'une phase suivante d'une activité d'adoucissement (100) est raccourcie (242) par rapport à une durée standard d'une phase de l'activité d'adoucissement (100) qui a été appliquée sans dépasser vers le bas la valeur de consigne SW1.

9. Procédé selon l'une quelconque des revendications 5 à 8 et selon la revendication 3, **caractérisé en ce que** dans un cycle de régénération (105) après la réalisation d'un cycle de prélèvement respectif (101, 102 ; 301), la somme des différences ΔM_{EZ} de tous les cycles de prélèvement (101, 102 ; 301) réalisés jusque-là du cycle de régénération (105) est comparée (150, 190) à la première valeur de consigne SW1, et en cas de dépassement vers le haut de la première valeur de consigne SW1 un autre cycle de prélèvement supplémentaire (101, 102 ; 301) s'ensuit, jusqu'à ce que la valeur de consigne SW1 soit atteinte.

10. Procédé selon l'une quelconque des revendications 5 à 9, **caractérisé en ce qu'**en cas de dépassement vers le bas de la première valeur de consigne SW1 par la quantité de sel M_{RZ} d'un dernier cycle de régénération (105) pour un ou plusieurs cycles de régénération consécutifs (105), un temps de dissolution de sel est prolongé en particulier par un apport d'eau selon E1.2) (120, 160) ou E2.3) (330) jusqu'au prochain prélèvement de solution de régénérant (9) du contenant de réserve (7) selon E1.3) (130, 170) ou E2.2) (320), par rapport à un temps de dissolution de sel appliqué en dernier lieu (241).

11. Procédé selon l'une quelconque des revendications précédentes, **caractérisé en ce qu'**une seconde valeur de consigne SW2 est définie pour une quantité de sel à utiliser par cycle de régénération (105) pour la régénération, et en cas de dépassement vers le haut de la seconde valeur de consigne SW2 par la quantité de sel M_{RZ} d'un dernier cycle de régénération (105), un fonctionnement normal, dans lequel des cycles de régénération (105) et des phases de l'activité d'adoucissement (100) de l'installation de traitement de l'eau (1) alternent, est terminé et passe à un fonctionnement spécial (103).

12. Procédé selon la revendication 11, **caractérisé en ce qu'**en fonctionnement spécial (103), le dispositif d'adoucissement (21) est bloqué pour un adoucissement de l'eau,
en particulier dans lequel le dispositif d'adoucissement (21) est contourné (380) avec une dérivation et/ou le dispositif d'adoucissement (21) est rempli avec une solution de conservation.

13. Procédé selon la revendication 11 ou 12, **caractérisé en ce que** le passage au fonctionnement spécial (103) et/ou l'état du fonctionnement spécial (103) est indiqué par un ou plusieurs signaux d'alerte (370), en particulier par voie optique, et/ou acoustique et/ou électronique, par exemple à un poste de commande, et/ou par radio, par exemple sur un téléphone mobile.

14. Procédé selon l'une quelconque des revendications précédentes, **caractérisé en**
**ce qu'**avec l'appareil de pesage (14), le poids m de la cuve de réserve (7) incluant de son contenu est suivi en fonction du temps t et un gradient temporel du poids dm/dt est évalué,
**en ce que** pour une ou plusieurs situations de fonctionnement, des valeurs limites ou des intervalles de consigne sont définis pour les gradients dm/dt,
et **en ce qu'**un dysfonctionnement de l'installation d'adoucissement d'eau (1) est constaté lorsque le gradient dm/dt dans une situation de fonctionnement enfreint une valeur limite associée ou un intervalle de consigne associé.

15. Procédé selon la revendication 14, **caractérisé en ce que** pour des temps d'un prélèvement de solution de régénérant (9) de la cuve de réserve (7), en particulier pour les étapes E1.3) (130, 170) et/ou E2.2) (320), une valeur absolue minimale MINB du gradient dm/dt est fixée, dont le dépassement vers le bas permet de constater un dysfonctionnement de l'acheminement du régénérant de la cuve de réserve (21),
et/ou **en ce que** dans une phase d'un fonctionnement d'adoucissement (100), une valeur absolue maximale MAXB du gradient dm/dt est fixée, dont le dépassement vers le haut permet de constater une fuite de la cuve de réserve (7).

16. Procédé selon l'une quelconque des revendications précédentes, **caractérisé en ce que** le niveau de liquide (10, 11) dans la cuve de réserve (7), en particulier le niveau de liquide N1 (10) dans E1.3) (130, 170) et/ou le niveau de liquide N2 dans E2.3 (330), (330), est ajusté, en actionnant une soupape mécanique (13) au moyen d'un flotteur (12) qui surnage sur la solution de régénérant (9) dans la cuve de réserve (7), en particulier dans lequel la soupape mécanique (13) est disposée dans ou au niveau d'une conduite d'apport et/ou de prélèvement (15) dans la cuve de réserve (7).

17. Procédé selon l'une quelconque des revendications précédentes, **caractérisé en ce qu'**avec l'appareil de pesage (14), le poids m de la cuve de réserve (7) incluant de son contenu est suivi en fonction du temps t,
et **en ce qu'**un achèvement d'un prélèvement de solution de régénérant (9) en particulier selon E1.3) (130, 170), et/ou un achèvement d'un apport d'eau, en particulier selon E2.3) (330) est évalué en fonction d'une évolution temporelle m(t), en particulier dans lequel l'achèvement est évalué par le gradient temporel dm/dt.

18. Procédé selon l'une quelconque des revendications précédentes, **caractérisé en ce que**
le dispositif d'adoucissement (21) comprend plusieurs contenants (4) avec de la résine échangeuse d'ions (5),
et **en ce que** les contenants (4) sont régénérés dans le même cycle de régénération (105).

19. Procédé selon la revendication 18 et selon la revendication 2, **caractérisé en ce que** de la solution de régénérant (9) prélevée de la cuve de réserve (7) à l'étape E1.3) (130, 170) et/ou à l'étape E2.2 (320) est acheminée (321, 322) successivement dans des contenants différents (4), en particulier dans lequel des contenants (4) dans lesquels à l'étape E1.3) (130, 170) et/ou l'étape E2.2 (320) justement aucune solution de régénérant (9) n'est acheminée, maintiennent pendant l'étape E1.3) (130, 170) et/ou à l'étape E2.2) (320) une fonction d'adoucissement pour de l'eau courante par l'installation d'adoucissement d'eau (1).

20. Installation d'adoucissement d'eau (1), comprenant
- un dispositif d'adoucissement (21), en particulier comprenant au moins un contenant (4) avec une résine échangeuse d'ions (5),
- une cuve de réserve (7) avec une solution de régénérant (9), dans lequel du sel régénérant solide (8) est contenu dans la cuve de réserve (7), et
- un appareil de pesage (14) pour évaluer le poids de la cuve de réserve (7) incluant de son contenu,
**caractérisée en**
**ce que** l'installation d'adoucissement d'eau (1) est conçue pour la réalisation d'un procédé selon l'une quelconque des revendications précédentes, dans lequel l'installation d'adoucissement d'eau (1) présente un dispositif pour la saisie et/ou l'ajustement d'un niveau de liquide (10, 11) dans la cuve de réserve (7), en particulier du niveau de liquide N1 (10) et/ou du niveau de liquide N2,
et dans lequel l'installation d'adoucissement d'eau (1) comprend un appareil de commande (6) électronique pour la réalisation automatique du ou des cycles de régénération (105).
